# EUROPÄISCHE PATENTSCHRIFT

(11) **EP 0 366 191 B1**
(45) Veröffentlichungstag und Bekanntmachung des Hinweises auf die Patenterteilung: **17.08.1994**
(21) Anmeldenummer: 89202642.8
(22) Anmeldetag: 19.10.1989
(51) Int. Cl.: G11B 15/10, G11B 15/44, G11B 15/675

(54) **Magnetbandkassettengerät mit einer Steuervorrichtung**
Magnetic-tape cassette apparatus with a control device
Appareil à cassette à bande magnétique à dispositif de commande

(30) Priorität: 25.10.1988 DE 3836247; 09.05.1989 DE 3915110
(43) Veröffentlichungstag der Anmeldung: 02.05.1990
(73) Patentinhaber: Philips Patentverwaltung GmbH, 22335 Hamburg (DE); Philips Electronics N.V., 5621 BA Eindhoven (NL)
(72) Erfinder: Klös-Hein, Karl, D-6301 Wettenberg (DE); Rumpf, Hermann, D-6348 Herborn-Schönbach (DE); Hermanni, Hans-Georg, D-6349 Sinn (DE)
(74) Vertreter: von Laue, Hanns-Ulrich, Dipl.-Ing.

(56) Entgegenhaltungen:
- EP-A- 0 095 815
- EP-A- 0 167 203
- EP-A- 0 168 856
- DE-A- 2 942 027
- DE-A- 3 447 539
- DE-A- 3 719 890
- US-A- 3 882 542

## Beschreibung

Die Erfindung bezieht sich auf ein Magnetbandkassettengerät mit einer Steuervorrichtung zum Steuern von Laufwerksfunktionen einschließlich des Einziehens und Auswerfens einer Kassette mittels eines mit einem Motor ausgerüsteten Antriebes, der eine von einem Servomotor hin und her längsverschiebliche Steuerstange umfaßt, die auf ihrer Bewegungsbahn zwischen Endpunkten verfahrbar ist und in bestimmten Betriebspositionen Laufwerksfunktionen steuert in Verbindung mit Schaltgebern und einer Logikschaltung.

Aus der US-A-38 82 542 ist ein Laufwerk für ein Magnetbandkassettengerät bekannt, das eine Stange aufweist, die eine Magnetbandkassette einziehen kann. Diese Stange läuft beim Einziehen bis zu einem am Ende der Einfahrbewegungsbahn gelegenen Endpunkt und bleibt dort stehen. Ein von der Stange angestoßener Schalter schaltet den Motor für den Spielbetrieb an, und ein Getriebe übernimmt das Abspielen des Magnetbandes. Der Endpunkt wird von einem Stift bestimmt, der den Motorschalter schaltet und gleichzeitig ein Servogetriebe umschaltet, das vorbereitet wird, die Kassette in der umgeschalteten Drehrichtung wieder auszuschieben, wenn das Band am Bandende zum Stillstand gekommen ist.

Es ist Aufgabe der Erfindung ein Magnetbandkassettengerät mit einer Steuervorrichtung der eingangs erwähnten Art zu schaffen, bei der die Bewegungen der Steuerstange an und zwischen den Bewegungs-Endpunkten mit geringem technischem Aufwand Laufwerksfunktionen aufrufen kann.

Die gestellte Aufgabe ist erfindungsgemäß bei einer ersten Ausführungsform dadurch gelöst, daß
- auf der Steuerstange in deren Längsrichtung eine Mitnehmerstange beweglich geführt ist,
- die Mitnehmerstange mit der Steuerstange verriegelbar ist längs einer Teilstrecke der Bewegungsbahn der Steuerstange,
- die Mitnehmerstange mit dem Lademechanismus des Laufwerkes mechanisch gekuppelt ist,
- die Mitnehmerstange und die Steuerstange mit an ihnen vorgesehenen Schaltgebern zur Auslösung von Schaltsignalen einen Steuerschalter beaufschlagen, der die von den Schaltgebern vermittelten Befehle der Logikschaltung zuleitet, die daraus Schaltkommandos für Gerätefunktionen bildet.

Bei einer zweiten Ausführungsform ist die gestellte Aufgabe erfindungsgemäß dadurch gelöst, daß
- an der Steuerstange eine Mitnehmerstange angeordnet ist, die zur Längsbewegungsrichtung der Steuerstange quer beweglich ist,
- die Mitnehmerstange mit dem Lademechanismus des Laufwerkes kuppelbar ist,
- die Mitnehmerstange durch Querbewegungen mit dem Lademechanismus kuppel- bzw. von ihm entkuppelbar ist mit Hilfe von am Laufwerk ortsfest angeordneten Führungen,
- wenigstens die Steuerstange mit wenigstens einem an ihr vorgesehenen Schaltgebern zur Auslösung von Schaltsignalen einen Steuerschalter beaufschlagt, der die von den Schaltgebern vermittelten Befehle der Logikschaltung zuleitet, die daraus Schaltkommandos für Gerätefunktionen bildet.

Über die Kupplung mit dem Lademechanismus ist die Steuerstange dazu eingerichtet, auch Kassetten einzuziehen und auszuwerfen. Greift der Kassettenschacht nur mittelbar, also über die Mitnehmerstange an die Steuerstange an, dann kann die Mitnehmerstange infolge einer von der Steuerstange unabhängigen Bewegung die mechanische Verbindung zwischen Steuerstange und Kassettenschacht lösen, so daß die Steuerstange stehen bleiben kann noch vor dem Ende des Einziehens einer Kassette oder beim Beginn der Auswerfbewegung. Das Ende des Einziehens und der Beginn des Auswerfens können von federbelasteten Hebeln übernommen werden. Darüber hinaus können Steuerstange und Mitnehmerstange oder die Steuerstange allein am Schalter unmittelbar oder mittelbar Schaltsignale auslösen.

Nach einer weiteren Ausgestaltung der Erfindung ist vorgesehen, daß bei beiden Ausführungsformen alle Schaltgeber der Steuervorrichtung einen einzigen Steuerschalter beaufschlagen, der über die Logikschaltung alle elektrischen Steuerfunktionen des Laufwerkes steuert.

Das Einwirken aller Schaltgeber auf einen einzigen Steuerschalter führt zu einer erheblichen Vereinfachung des Laufwerkes in Verbindung mit der Logikschaltung. Die Ableitung von elektrischen Signalimpulsen aus mechanischen Bewegungen in Verbindung mit einer Logikschaltung führt zu einer wesentlichen Vereinfachung der Steuervorrichtung.

Nach einer weiteren Ausgestaltung der Erfindung ist vorgesehen, daß bei beiden Ausführungensformen die Steuer- und Mitnehmerstange wenigstens an den Endpunkten ihrer Bewegungsbahn voneinander entkuppelt sind, damit ihre Schaltgeber unabhängig von der Stellung der jeweils anderen Stange den Steuerschalter und gegebenenfalls weitere Funktionsteile beaufschlagen können. Die Steuerstange kann so vom Lademechanismus entkoppelt noch weiterfahren bis zum Endpunkt ihrer Bewegungsbahn und dort außer einem Schaltgeber, der die Umstellung der Drehrichtung des Servomotors veranlaßt, die Kopfplatte in ihre Spielstellung bringen.

Nach einer weiteren Ausgetaltung der Erfindung ist vorgesehen, daß bei der ersten Ausführungsform auf der Steuerstange eine zweiarmige Klinkenwippe angeordnet ist, deren erster Klinkenarm wenigstens im Verlauf einer Teilstrecke der Stangenbewegungsbahn federbelastet bestrebt ist, zur Kupplung von Steuer- und Mitnehmerstange in eine Ausnehmung der Mitnehmerstange einzufallen, und deren zweiter Klinkenarm mit ortsfesten Führungen zusammenwirkt, die die Klinkenwippe gegen Federkraft unter ihrer Wirkung so verschwenken, daß der erste Klinkenarm nicht in die Ausnehmung einfallen und damit nicht kuppeln kann. Die Kupplung von Steuerstange und Mitnehmerstange kann mittels der Nocken also an gewünschten Stellungen der Stangen bewußt aufgehoben werden.

Nach einer weiteren Ausgestaltung der Erfindung ist vorgesehen, daß bei beiden Ausführungsformen der Steuerschalter eine Schaltnase aufweist, die mechanisch unbelastet in einer neutralen Mittelstellung steht und die von den Schaltgebern beim Freigeben oder Anstoßen in der einen oder anderen Verstellrichtung der Steuerstangen Schaltimpulse abgibt. Der Steuerschalter kann damit aus zwei entgegengesetzten Bewegungsabläufen heraus zur Abgabe von Signalimpulsen veranlaßt werden.

Nach einer weiteren Ausgestaltung der Erfindung ist vorgesehen, daß bei beiden Ausführungsformen die Steuerstange eine Zahnstangenzahnung aufweist und ein Zahnrad des Servogetriebes mit der Zahnstangenzahnung zusammenwirkt. Die Ausbildung als Zahnstange stellt eine einfache und betriebssichere Art der Bewegungsübertragung dar.

Nach einer weiteren Ausgestaltung der Erfindung ist vorgesehen, daß bei beiden Ausführungsformen die Steuerstange bei ihrer Längsbewegung in Einzugsrichtung einer Kassette nach einem Entkuppeln von dem Lademechanismus bis zum Endpunkt ihrer Bewegungsbahn frei vom Lademechanismus verfahrbar ist, und zwar so weit, daß sie gegen einen Schenkel der Kopfplatte des Gerätes stößt und die Kopfplatte damit in ihrer Spielstellung verschwenkt, wobei ein Schaltgeber an der Steuerstange den Steuerschalter anstößt, um eine Drehrichtungsumkehr des Servomotors zu bewirken. Durch die Entkupplung wird dieser Überhub der Steuerstange möglich.

Nach einer weiteren Ausgestaltung der Erfindung ist vorgesehen, daß bei der esten Ausführungsform die Mitnehmerstange mit einem Schaltgeber versehen ist, der beim Einschieben der Kassette den Steuerschalter zur Abgabe eines Anlaufimpulses und beim Ausschieben zur Abgabe eines Ausschaltimpulses für den Servomotor veranlaßt. Anfang und Ende der Betriebsfunktionen lassen sich so über die Mitnehmerstange leicht schalten.

Nach einer weiteren Ausgestaltung der Erfindung ist bei der zweiten Ausführungsform mit einem Betätigungshebel, der seitlich des Lademechanismus drehbeweglich gelagert ist und den Lademechanismus greifend auf einen Kassettenmitnehmer einwirkt, der vom Betätigungshebel zwischen einer Auswurf- und einer Einzugstellung bewegbar ist, vorgesehen, daß der Betätigungshebel mit einem als Schaltgeber wirkenden Schaltstift auf den einzigen Steuerschalter einwirkt zur Abgabe von Start- und Stopimpulsen. Mittels der von Hand eingeschobenen Kassette wird so über den Betätigungshebel das Laufwerk mittels des einen Steuerschalters beim Einschieben eingeschaltet.

Nach einer weiteren Ausgestaltung der Erfindung ist bei beiden Ausführungsformen vorgesehen, daß ein um eine Achse verschwenkbares Schaltorgan des Servogetriebes vorgesehen ist, das ebenfalls einen Schaltgeber für den einen Steuerschalter aufweist, der nach Abschluß der Servobewegungen des Servomechanismus der Logikschaltung durch Anstoßen des Steuerschalters das Signal übermittelt, daß Servovorgänge, wie Kassette einziehen oder Kopfplatte in Spielstellung bringen, abgeschlossen sind. Gibt das Steuerorgan das Signal, die Servobewegung ist abgeschlossen, ab, dann hat das Steuerorgan das Servogetriebe bereits ausgeschaltet. Nach einer weiteren Ausgestaltung der Erfindung ist die Ausschaltung nämlich dadurch erfolgt, daß das schwenkbare Schaltorgan mit einem von ihm getragenen Servozahnrad, das die Verbindung zwischen dem Servomotor und der Zahnung der Steuerstange herstellen kann, von der Steuerstange selbst in der Servoantriebsstellung gehalten werden kann und zum Umschalten von Servobetrieb auf Spielbetrieb aus dieser Verbindung von der Steuerstange freigebbar ist zum Verschwenken und Bewirken des Umschaltens bei gleichzeitiger Betätigung des Steuerschalters.

Nach einer weiteren Ausgestaltung der Erfindung ist vorgesehen, daß das Schaltorgan einen Anschlagstift aufweist, der in Verbindung mit dem Schenkel der Kopfplatte den Servomechanismus mit der Steuerstange in Eingriffstellung hält oder zum Umschalten freigibt. Das Schaltorgan kann dadurch in einer Stand-By-Stellung gehalten werden. Da nach einer weiteren Ausgestaltung beider Ausführungsformen der Erfindung vorgesehen ist, daß das Schaltorgan beim Verschwenken einen Mitnehmerstift eines Umlenkgetriebes aus einer gabelförmigen Halterung freigibt, damit das Umlenkgetriebe ein Übertragungszahnrad an den einen oder anderen Wickelteller anlegen kann zum Kuppeln des Zentralrades mit einem der Wickelteller. So kann in dieser Stand-By-Stellung das Übertragungszahnrad von den Wickeltellern getrennt gehalten werden.

Nach einer weiteren Ausgestaltung der Erfindung ist vorgesehen, daß das Schaltorgan mit einem Führungsstift versehen ist, der beim Bewegen der Steuerstange hinter eine Führungskante der Steuerstange greift und dadurch das Schaltorgan in einer Schwenklage hält, in der das Servogetriebe die Steuerstange antreibt und das Umlenkgetriebe außer Eingriff ist mit den Wickeltellern. Hierdurch hält die Steuerstange das Schaltorgan in der Stellung, in der das Schaltorgan das Servogetriebe mit der Zahnstange der Steuerstange kuppelt während der Steuerstangenbewegung .

Nach einer weiteren Ausgetaltung der zweiten Ausführungsform der Erfindung ist vorgesehen, daß die Mitnehmerstange an der Steuerstange schwenkbar gelagert ist und eine Mitnehmermulde seitlich der Endfläche der Steuerstange ausbildet, in die ein Kupplungsglied des Lademechanismus eingreifen kann. Durch das Schwenken der Mitnehmerstange wird damit das Kuppeln und Entkuppeln des Lademechanismus mit der Steuerstange erreicht.

Nach einer weiteren Ausgestaltung der Erfindung ist vorgesehen, daß die Mitnehmerstange zur Ausbildung der Mitnehmermulde eine Kupplungsnase aufweist, die sich in der Kuppelposition in einem Abstand vor einer Endfläche der Steuerstange befindet, wobei sich zwischen der Kupplungsnase, der Endfläche und der Steuerstange die Mulde ausbildet. Die Mitnehmermulde wird damit jeweils dann gebildet, wenn das Kupplungsglied mit der Steuerstange gekuppelt werden soll.

Nach einer weiteren Ausgestaltung der Erfindung ist vorgesehen, daß die Mitnehmerstange über die Mitnehmermulde hinaus verlängert ist und die Verlängerung derart mit den am Laufwerk angeordneten Führungen zusammenwirkt, daß diese Führungen die Mitnehmerstange zum Einfangen in oder Freigeben aus der Mulde des Kupplungsgliedes verschwenken, wobei die Mitnehmerstange in Längsrichtung federnd nachgiebig ist.

Die Erfindung wird anhand der Zeichnung näher erläutert. Es zeigen:
Fig. 1 eine schaubildliche Ansicht des Laufwerkes eines Magnetbandgerätes,
Fig. 2 schaubildlich anhand einer Explosionsansicht den Liftmechanismus und den Steuermechanismus einer Kopfplatte und des Liftmechanismus,
Fig. 3 und 4 in schaubildlicher Darstellung eine Steuerstange mit aufsitzender Mitnehmerstange in Ansichten von oben und unten,
Fig. 5 den Mechanismus des Gerätes in Eject-Position in schematischer Darstellung,
Fig. 5a einen Ausschnitt aus Fig. 5 mit Herausstellung des Servomechanismus des Gerätes in der Eject-Position,
Fig. 6 den Servomechanismus in einer Stellung, in der die Steuerstange beim Erreichen des Endpunktes der Einzug-Bewegungsbahn die Kopfplatte in Spielstellung gebracht hat,
Fig. 7 den Mechanismus nach Fig. 5 in seiner Spielposition,
Fig. 7a einen Ausschnitt aus Fig. 7 mit dem Servomechanismus in Spielposition,
Fig. 8 den Mechanismus nach Fig. 5 in der Stand-by-Position und
Fig. 8a einen Ausschnitt aus Fig. 8,
Fig. 9 den Mechanismus nach Fig. 5 in der Schnellspulposition,
Fig. 9a einen Ausschnitt aus Fig. 9 mit dem Servomechanismus in Schnellspulposition,
Fig. 10 eine zweite Ausführungsform eines Lademechanismus in schaubildlicher Darstellung,
Fig. 11 eine andere zu dem Lademechanismus nach Fig. 10 gehörige Ausführungsform des Gerätemechanismus,
Fig. 12 und 13 schaubildliche Darstellungen einer zu dem Gerätemechanismus nach Fig. 11 gehörigen Steuerstange mit zugehöriger Mitnehmerstange,
Fig. 14 den Servomechanismus nach Fig. 11 in der Eject-Position,
Fig. 15 den Servomechanismus nach Fig. 11 in einer Position, in der die Steuerstange beim Erreichen des Endpunktes der Einzugsbewegungsbahn die Kopfplatte in Spielstellung gebracht hat,
Fig. 16 den Servomechanismus nach Fig. 11 in der Spielposition,

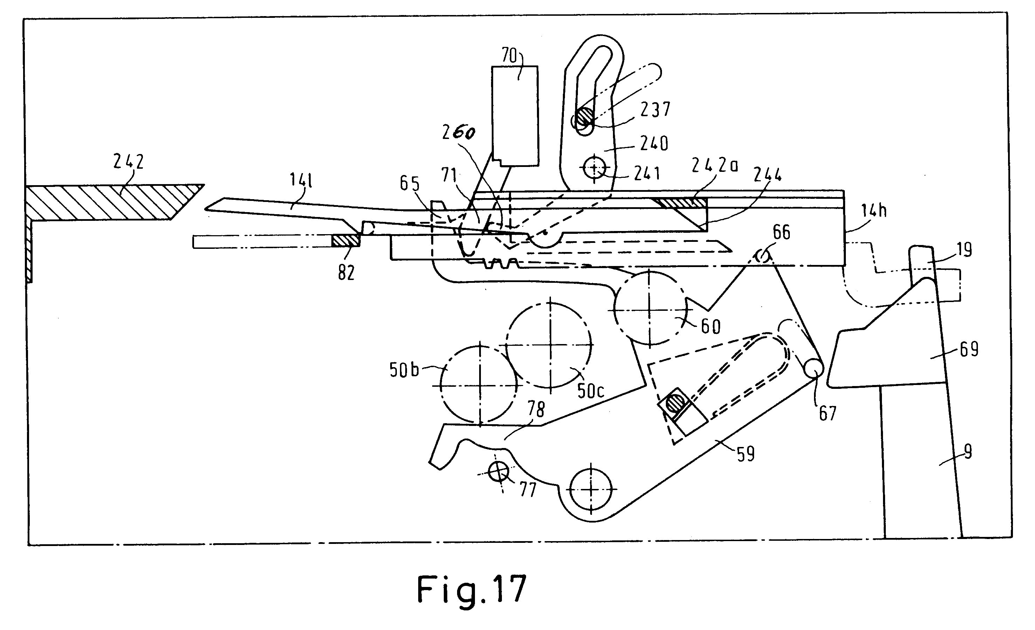

Fig. 17 den Servomechanismus nach Fig. 11 in der Schnellspul-MSS-Position,
Fig. 18 den Servomechanismus nach Fig. 11 in der Stand-By-Position.

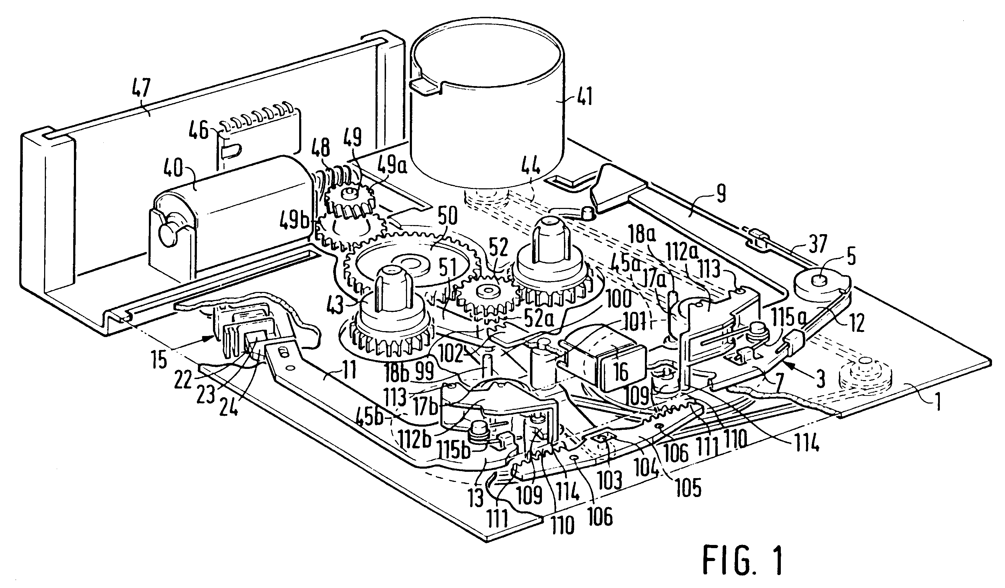

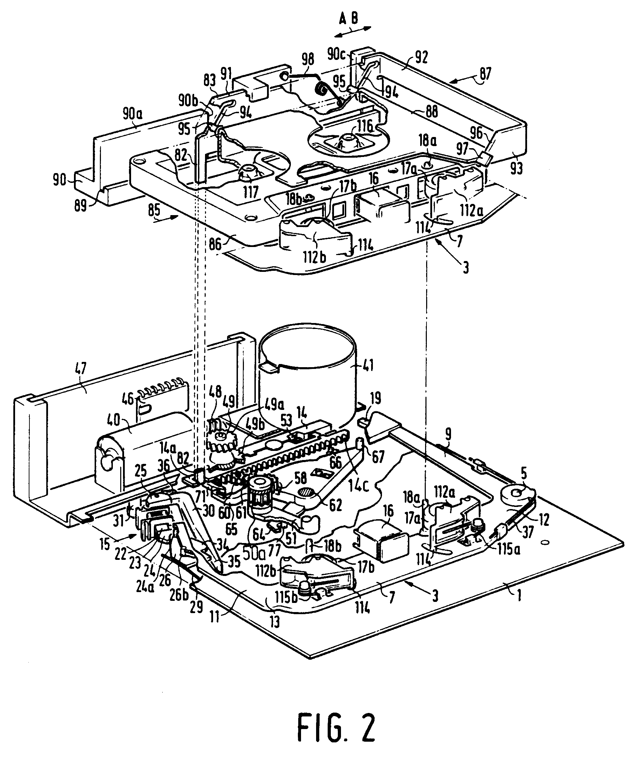

Die Fig. 1 und 2 zeigen eine als Gestell wirkende Chassisplatte 1 eines Magnetband-Kassettengerätes mit einer Kopfplatte 3, die um einen exzentrischen Drehpunkt 5 verschwenkbar ist. Die Kopfplatte 3 ist U-förmig ausgestaltet und weist von den Enden ihrer Basis 7 in gleicher Richtung abstehende erste und zweite Schenkel 9 und 11 auf. Die Schenkel 9 und 11 greifen in Eckbereichen 12 und 13 an. Während der erste Schenkel 9 mit einer Transportnase 19 mit einer Steuerstange 14 (in Fig. 1 nicht zu sehen) zusammenwirkt, bildet der zweite Schenkel 11 ein Funktionsteil, welches mit einer Elektrohaltemagnetvorrichtung 15 zusammenarbeitet.

Die Basis 7 der Kopfplatte 3 trägt einen Magnetkopf 16 und Andruckrollen 17a, 17b, die gegenüber der Basis 7 verschwenkbar sind. Die Andruckrollen 17a und 17b können mit Tonwellen 18a und 18b zusammengeführt werden, um das Magnetband in der einen oder anderen Richtung an dem Magnetkopf 16 vorbei zu führen.

Die Verschwenkung der Kopfplatte 3 erfolgt jeweils über die erst aus Fig. 2 ersichtliche Steuerstange 14. Über die Steuerstange 14 kann die Kopfplatte 3 um den exzentrischen Drehpunkt 5 schwenken und dabei bei jedem Anstoßen mittels der Steuerstange 14 im Uhrzeigersinn drehen.

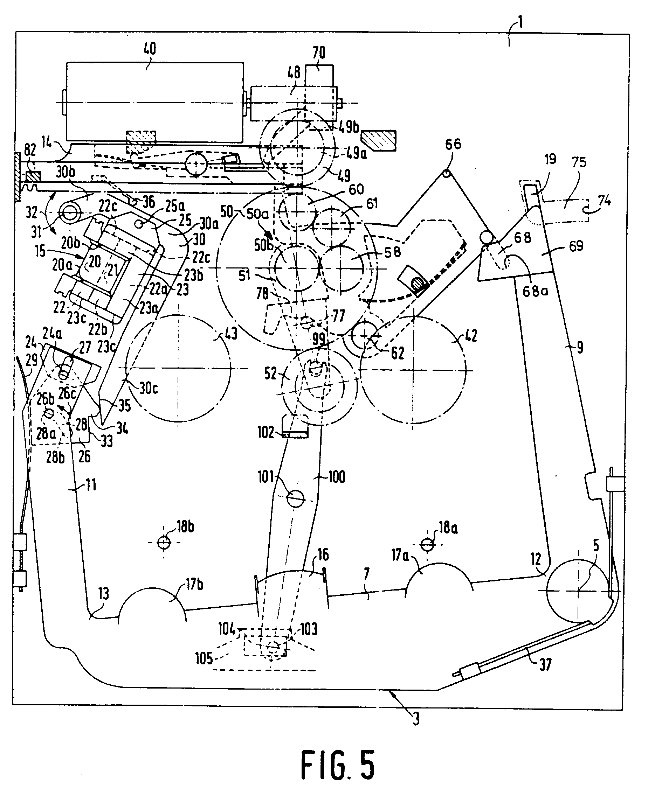

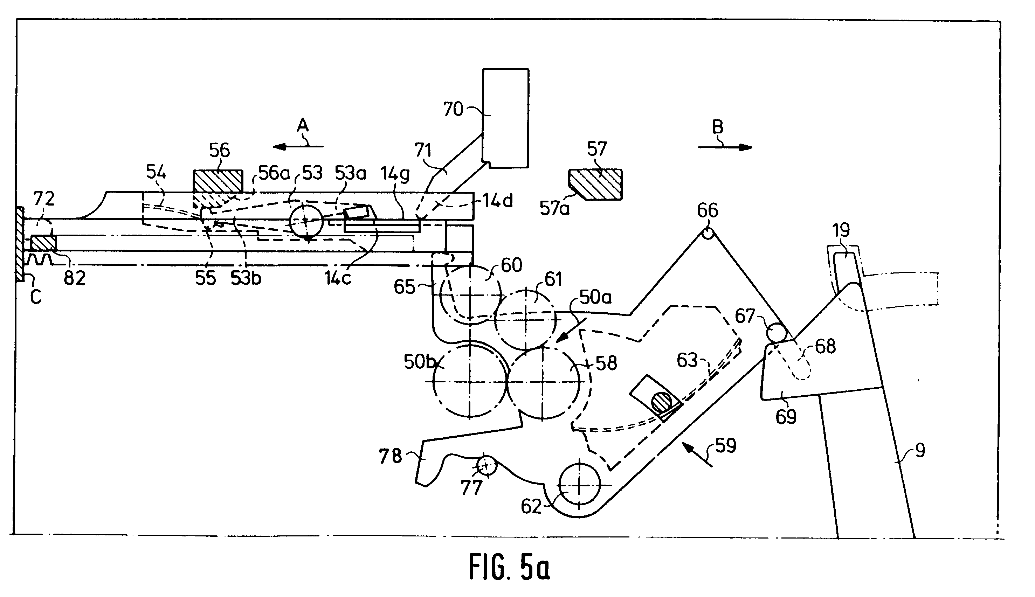

Die Elektrohaltemagnetvorrichtung 15 besteht aus einer Magnetspule 20, in deren Spulenhohlraum 21 (Fig. 5) Schenkel U-förmiger, magnetisch voneinander getrennter Ankereisen 22, 23 eingeschoben sind. Die beiden Ankereisen 22, 23 liegen übereinander, wobei sich die jeweiligen Ankereisenschenkel 22a, 23a paarweise überdecken. Die Eisenjoche 22b, 23b liegen an gegenüberliegenden Spulenenden 20a, 20b. Die Elektrohaltemagnetvorrichtung 15 ist auf der Chassisplatte 1 fest montiert.

An den freien Schenkelenden sind Polschuhe 23c und 22c ausgebildet, die mit einer ersten Ankerplatte 24 und eine zweite Ankerplatte 25 zusammenarbeiten. Die erste Ankerplatte 24 ist mittels eines Stiftes 24a drehbar auf einem Schlitten 26 angeordnet. Dieser Schlitten 26 greift mit dem Stift 24a in eine Leitnut 27 des Schenkels 11. Ein Führungsstift 26b des Schlittens 26 kann in einer gekrümmten Nut 28 des Funktiontsteiles 11 entlang geführt werden. Die bogenförmige Nut 28 verläuft unter einem schrägen Winkel bogenförmig in Richtung auf die Elektrohaltemagnetvorrichtung 15 zu. Eine Feder 29 sorgt dafür, daß der Führungsstift 26b im Normalfall in den Endbereich 28a der bogenförmigen Nut 28 einfährt. In dieser Stellung verläuft der Schlitten 26 oberhalb des Schenkels 11 parallel zu diesem.

Die zweite Ankerplatte 25 ist auf einem Arm 30 mittels eines Stiftes 25a drehbar angeordnet. Der Arm 30 selbst ist L-förmig ausgestaltet und hat einen kürzeren Armteil 30a, der auch die zweite Ankerplatte 25 trägt und der an seinem Ende 30b um eine Drehachse 31 drehbar ist in Richtung eines Doppelpfeiles 32. Ein längerer Armteil 30c erstreckt sich parallel zu der Magnetspule 20 bis zu einer Seitenfläche 33 des Schlittens 26, wo er in der Nähe einer Nase 34 des Schlittens mit einer schrägen Auflauffläche 35 endet.

Die Ankerplatten 24 und 25 können, wenn sie an die Polschuhe 23c bzw. 22c angelegt sind, bei Erregen der Magnetspule 20 an den Polschuhen haften. Durch dieses Haften können sie zwei Arbeitsstellungen der Kopfplatte 3 so lange bestimmen, wie die Magnetspule 20 erregt ist. Erst wenn die Magnetspule 20 entregt wird, fallen beide oder auch nur eine Ankerplatte, je nachdem ob beide oder nur eine angelegt waren, ab, und eine Feder 37, die auf die Basis 7 der Kopfplatte 3 einwirkt, kann die Kopfplatte 3 entgegen dem Uhrzeigersinn in eine Ruhestellung verschwenken. Einzelheiten der Elektrohaltemagnetvorrichtung sind in der DE-Patentanmeldung P 37 14 704.8 beschrieben.

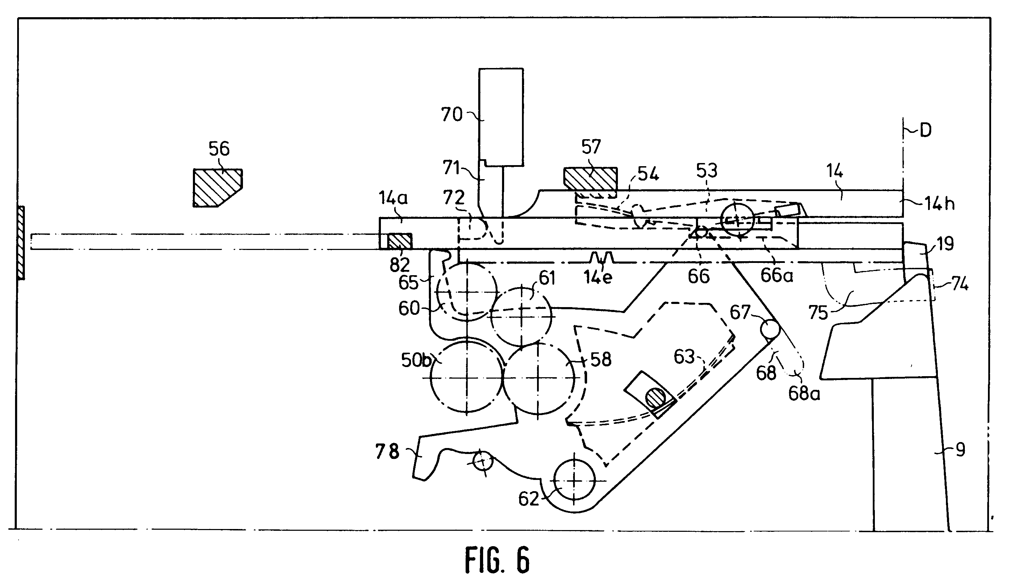

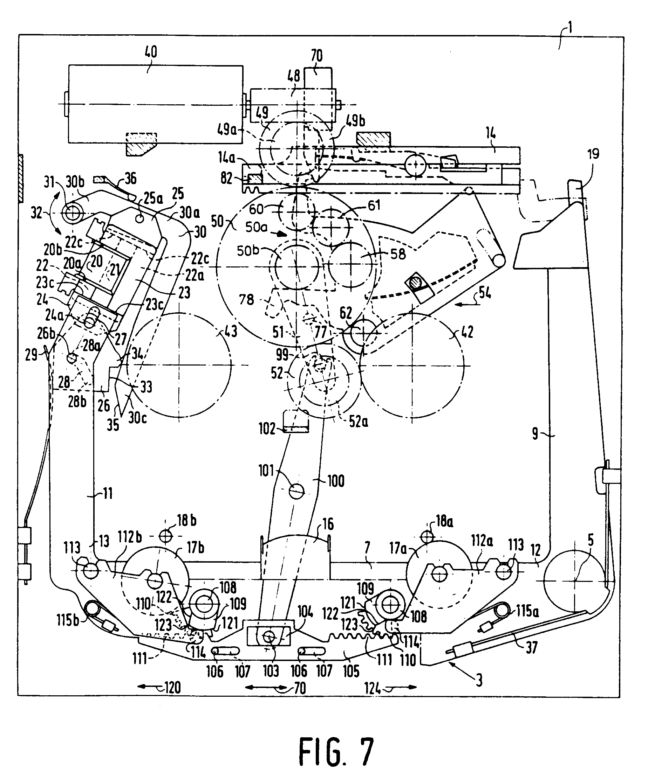

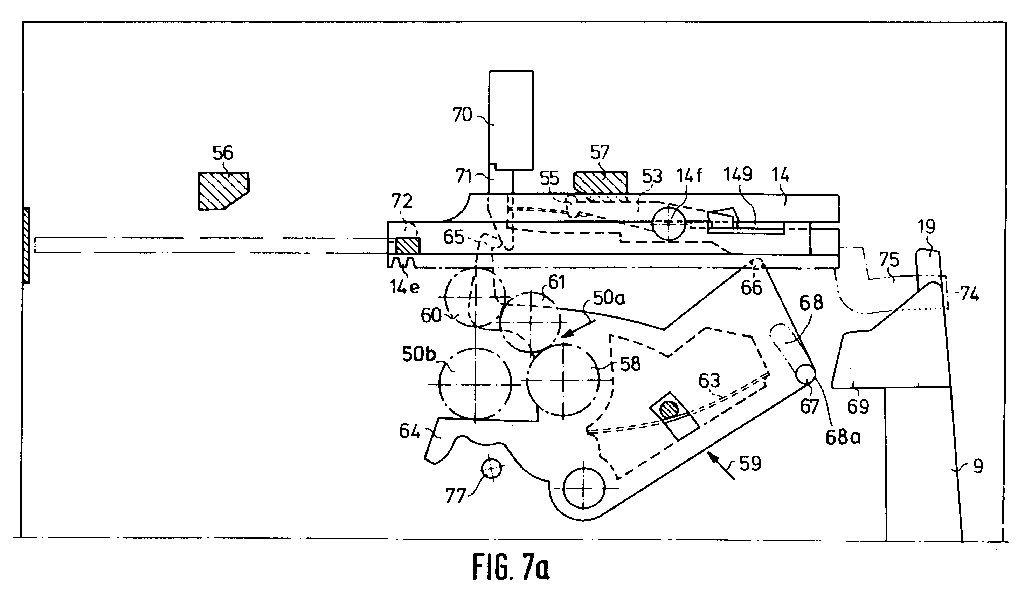

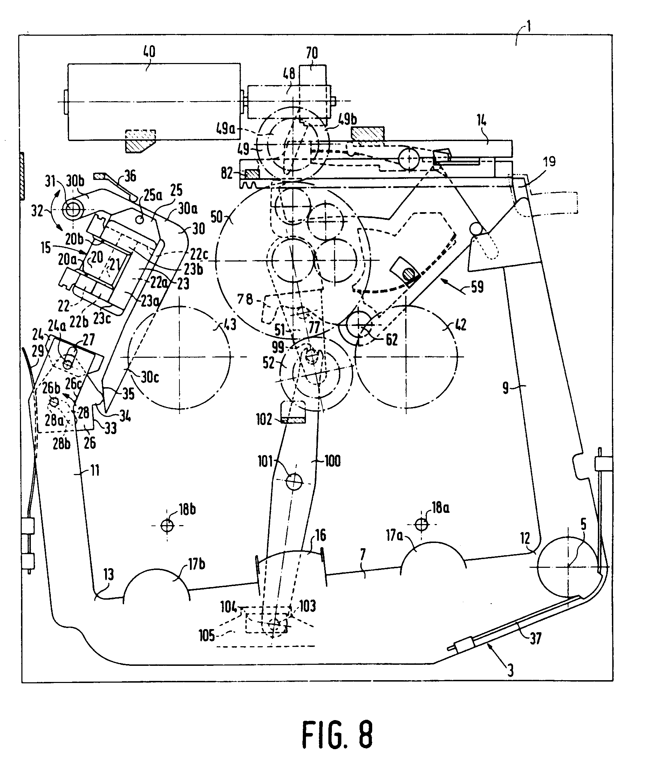

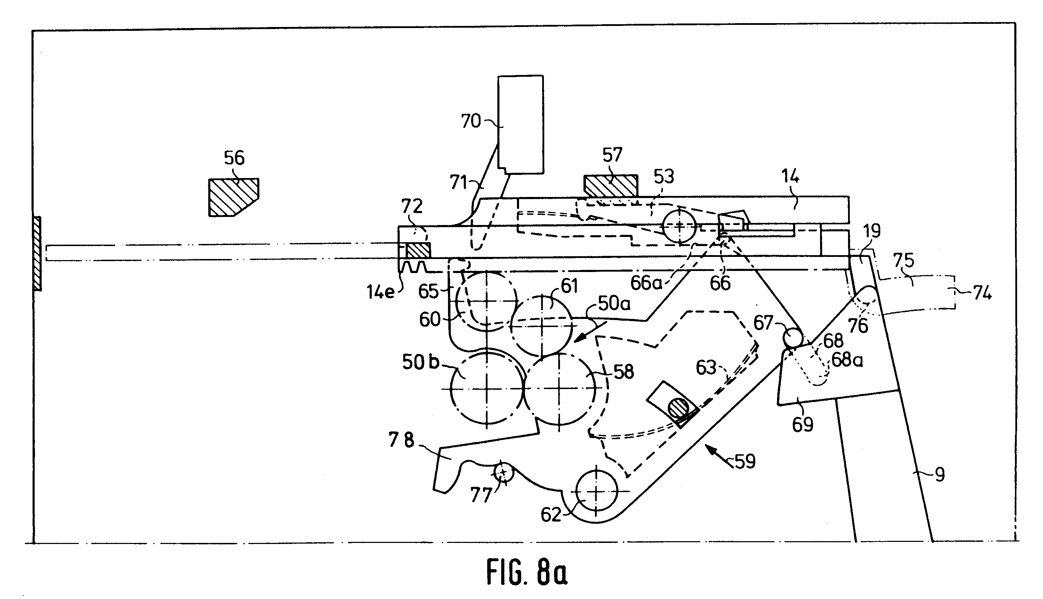

Es wird nun das Zusammenwirken der Kopfplatte mit dem Elektrohaltemagneten anhand von deren Funktion näher beschrieben. Fig. 8 und 8a zeigen die sogenannte Stand-by-oder Ruhestellung. Die Magnetspule 20 ist entregt, und die Ankerplatte 24 ist von den Polschuhen 23c des Ankereisens 23 abgerückt. Die Ankerplatte 25 liegt an den Polschuhen 22c an, da eine Feder 36 für eine ständige Anlage sorgt. Die Feder 37 hält die Kopfplatte 3 im Gegenuhrzeigersinn verschwenkt in der Ruhe- oder Stand-by-Stellung. Sowohl der Magnetkopf 16 als auch die Andruckrollen 17a und 17b geben ein nicht dargestelltes Magnetband, welches zwischen den Andruckrollen/Tonwellenpaaren 17a, 18a/17b, 18b vor dem Magnetkopf 16 vorbeiläuft, völlig frei. Soll die Kopfplatte in die Spielstellung (Fig. 6, 7 und 7a) geschwenkt werden und in der Spielstellung verharren, dann stößt die Steuerstange 14 gegen eine Transportnase 19, wodurch die Kopfplatte 3 im Uhrzeigersinn verschwenkt wird. Die Magnetspule 20 bleibt zunächst unerregt. Mit dem Verschwenken der Kopfplatte 3 im Uhrzeigersinn fährt auch der Schenkel 11 in Richtung auf die Elektrohaltemagnetvorrichtung 15 vor. Die Nase 34 des Schlittens 26 stößt gegen die schräge Fläche 35 des längeren Armteiles 30c. Die Feder 36 ist so schwach bemessen, daß die Nase 34 die Fläche 35 und damit den längeren Armteil 30c entgegen dem Uhrzeigersinn nach außen wegdrückt. Der Führungsstift 26b bleibt in dem Endbereich 28a liegen. Das Funktionsteil 11 führt die erste Ankerplatte 24 gegen die Polschuhe 23c. Die Magnetspule 20 wird nun erregt, und die Ankerplatte 24 wird an den Polschuhen 23c festgehalten (Fig. 6 und 7). Damit ist gleichzeitig auch die Kopfplatte 3 in der Spielstellung festgehalten. Ist der Spielbetrieb zu Ende, dann wird die Magnetspule 20 entregt, und die Feder 37 schwenkt die Kopfplatte entgegen dem Uhrzeigersinn in die Ruhe- oder Stand-by-Stellung zurück. Aus dieser Ruhe- oder Stand-by-Stellung kann wieder die Spielstellung angefahren werden. Es wird nun das Erreichen und Festhalten der Schnellspulstellung erläutert.

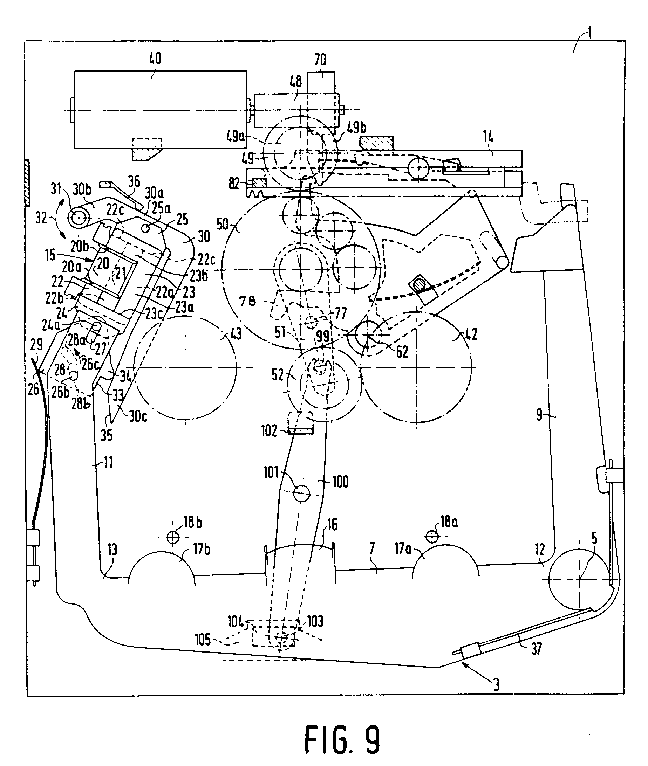

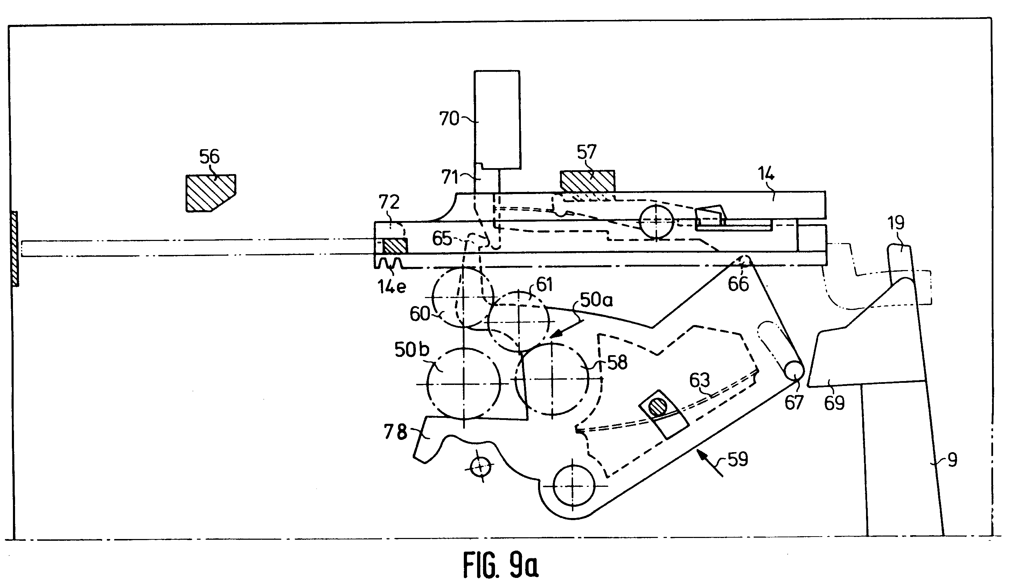

Um in die Schnellspulstellung (Fig. 9 und 9a) zu kommen, schiebt die Steuerstange 14 die Kopfplatte in die Spielstellung und wird die Magnetspule 20 erregt. Die zweite Ankerplatte 25 liegt bereits an den Polschuhen 22c an, und zu der Kraft der Feder 36 kommt nun noch die magnetische Haltekraft. Es ist damit schwerer geworden, den längeren Armteil 30c entgegen dem Uhrzeigersinn wegzuschwenken. Die Nase 34 des Schlittens 26 ist nun nicht in der Lage, den längeren Armteil 30c wegzuschwenken. Das bedeutet, daß die Nase 34 vor der Fläche 35 des längeren Armteiles 30c ausweichen muß. Dies führt dazu, daß der Führungsstift 26b zu dem anderen Ende 28b der bogenförmigen Nut 28 geschoben wird. Durch dieses Verschieben rutscht der Schlitten 26 gleichzeitig unter einem Verdrehen in Richtung eines Pfeiles 26c mit dem Leitstift 24a in der Nut 27 in Richtung auf die Elektrohaltemagnetvorrichtung 15. Das bedeutet, daß der Schenkel 11 praktisch in Richtung auf die Elektrohaltemagnetvorrichtung 15 verlängert wird. Dieses Verlängern hat zur Folge, daß der Schenkel 11 nicht so weit in Richtung auf die Elektrohaltemagnetvorrichtung 15 vorfahren kann, wie zuvor in bezug auf die Spielstellung beschrieben wurde. Die Kopfplatte 3 bleibt also ein wenig aus der Spielstellung nach Fig. 6 und 7 zurück, und das Magnetband ist etwas von dem Magnetkopf 16 abgehoben. Auch liegt keine der Andruckrollen 17a bzw. 17b an einer der Tonwellen 18a, 18b an. Damit ist die Stellung für schnellen Vor- und Rücklauf erreicht.

Soll schneller Vor- oder Rücklauf beendet werden, dann wird die Magnetspule 20 entregt. Das führt dazu, daß sich die Ankerplatte 24 von den Polschuhen 23c löst, und die Feder 37 kann die Kopfplatte 3 entgegen dem Uhrzeigersinn wieder in die Ruhe- oder Stand-by-Stellung (Fig. 8) zurückdrehen.

Auf der Chassisplatte 1 sind zwei Motoren 40, 41 angeordnet. Der Motor 40 dient der Steuerung der Bewegungen der Kopfplatte 3, der Bewegung des Servomechanismus sowie dem Antrieb der Wickelteller 42, 43. Der Motor 41 dient über eine Peese 44 dem Antrieb der Tonwellen 18a, 18b. Dieser Antrieb findet statt über Schwungscheiben 45a, 45b. Die Peese 44 ist dabei S-förmig um die Schwungscheiben 45a, 45b gelegt, um gegenläufige Drehrichtungen der Tonwellen 18a, 18b zu bewirken. Die Motoren werden gesteuert über eine Logikschaltung 46, die an einer Schaltungsplatte 47 angeordnet ist. Die Schaltungsplatte 47 ist an der Chassisplatte 1 angeordnet.

Der Motor 40 treibt über eine Schneckenwelle 48 und ein Untersetzungsrad 49, das aus zwei Teilrädern 49a und 49b besteht, ein Zentralzahnrad 50 an. Um die Achse 50a des Zentralzahnrades 50 ist ein Schwenkarm 51 verschwenkbar, an dem drehbar ein Übertragungszahnrad 52 gelagert ist. Das Übertragungszahnrad 52 ist über eine nicht dargestellte Friktionskupplung zwischen dem Schwenkarm 51 und dem Zentralzahnrad 50 derart verschwenkbar, daß das Übertragungszahnrad 52 wahlweise den einen Wickelteller 42 oder den anderen Wickelteller 43 antreiben kann.

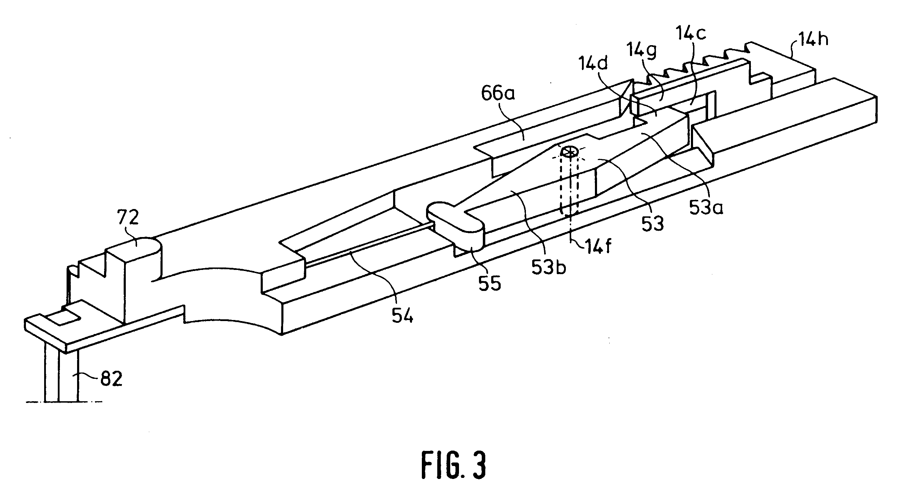

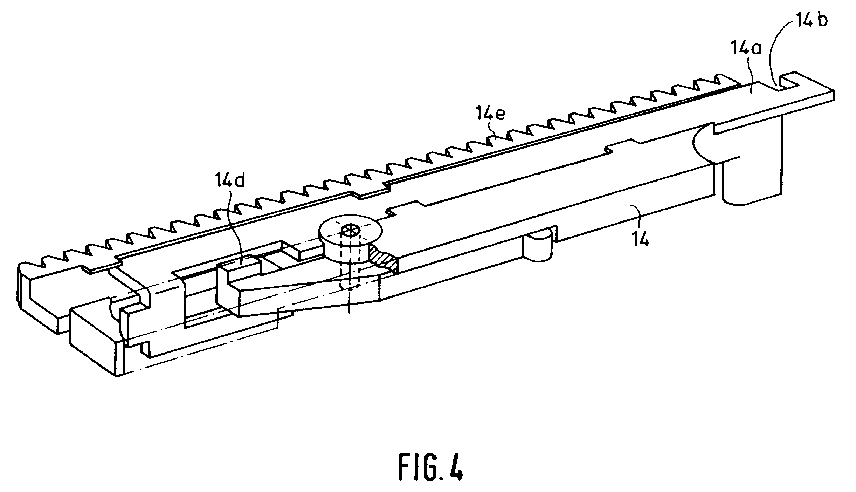

Die Steuerstange (Fig. 3 und 4) trägt - auf ihr längsverschieblich - eine Mitnehmerstange 14a. Die Mitnehmerstange 14a hat eine Hakenausnehmung 14b, in die ein Kupplungsglied 82 eines später zu beschreibenden Liftschiebers eingreift. Eine weitere Kupplungsausnehmung 14c dient dem Eingriff eines Kupplungsnockens 14d (Fig. 4). Die Steuerstange 14 ist mit einer Zahnstangenzahnung 14e versehen. Fig. 3 zeigt anhand einer Draufsicht auf die Steuerstange eine um eine Achse 14f verschwenkbare zweiarmige Klinkenwippe 53 mit einem ersten Klinkenarm 53a, der aufgrund der Federbelastung einer auf einen zweiten Klinkenarm 53b wirkenden Feder 54 bestrebt ist, mit dem Kupplungsnocken 14d in die Kupplungsausnehmung 14c der Mitnehmerstange 14a einzufallen. Der zweite Klinkenarm 53b ist an seinem freien Ende mit einer Auflaufwulst 55 versehen, die mit chassisfesten Führungen 56 und 57 zusammenwirkt.

Die Steuerstange 14 ist vom Servomotor 40 in Längsrichtung verschieblich antreibbar unter Zuhilfenahme eines Servogetriebes 50a, zu dem ein Schaltrad 58 gehört. Das Schaltrad 58 ist auf einem Schaltorgan 59 angeordnet und kann seine Drehbewegungen von einem Zahnrad 50b, das auf der Achse des Zentralzahnrades 50 zusammen mit diesem drehbar ist, über Zahnräder 60 und 61 auf die Zahnung 14e der Steuerstange übertragen. Das Schaltorgan 59 ist um eine Achse 62 drehbar gelagert und wird mit Hilfe einer Feder 63 im Uhrzeigersinn belastet. Weiterhin weist das Schaltorgan 59 fingerartig auseinanderstrebend eine Arretiergabel 78, einen Schaltgeber 65, einen Führungsstift 66, der an einer Führungskante 66a der Steuerstange 14 entlang laufen kann, bis er diese verläßt, und einen Anschlagstift 67 auf, der in einer Nut 68 der Chassisplatte 1 läuft und mit dem Kopf 69 des Schenkels 9 zusammenwirkt.

Auf der Chassisplatte 1 ist ein Steuerschalter 70 angeordnet, dessen Schalternase 71 unbelastet eine neutrale Mittelstellung einnimmt. Die Schalternase 71 kann aus beiden Bewegungsrichtungen, die durch Pfeile A und B in Fig. 5a angegeben sind, von Schaltgebern angestoßen werden, wobei der Schalter Signalimpulse an die Logikschaltung 46 abgibt. Schaltgeber sind ein Mitnehmerhaken 14g an der Mitnehmerstange 14a, ein Schaltorganhaken 65 und ein Steuerstangennocken 72.

Das Kupplungsglied 82 stellt die Verbindung zu einem Liftschieber 83 her (Fig. 2). Die Richtung eines Pfeiles 85 (Pfeil B in Fig. 5a) gibt die Einschiebrichtung einer Kassette 86 in einen Lademechanismus 87 an, zu dem der Liftschieber 83 gehört. Der Lademechanismus 87 weist einen Liftschacht 88 auf, der die Kassette 86 aufnimmt.

Der Liftschieber 83 ist in einer Schiebeführung 89 längsverschieblich in Richtung des Doppelpfeiles AB geführt. Die Schieberführung 89 gehört dabei zu einem Kunststoffteil 90, das auf nicht dargestellte Weise mit der Chassisplatte 1 verbunden ist. Der Liftschieber 83 ist in der Darstellung nach Fig. 2 etwas U-förmig ausgebildet mit einem langen Schenkel 91, einer Basis 92 und einem kurzen Schenkel 93. In dem langen Schenkel 91 sind zwei schräge Kulissen 94 vorgesehen, in denen Stifte 95 des Liftschachtes 88 geführt sind. Der kurze Schenkel 93 ist ebenfalls mit einer schrägen Kulisse 96 versehen, die mit einem Lappen 97 des Liftschachtes zusammenwirkt. Auf diese Weise erfährt der Liftschacht 88 eine Art Dreipunkt-Lagerung oder -Führung gegenüber dem Liftschieber 83. Weiterhin ist eine Übertotpunktfeder 98 vorgesehen, die sich einerseits an dem Kunststoffteil 90 und andererseits an dem langen Schenkel 91 des Liftschiebers 83 abstützt.

Das Kunststoffteil 90 weist einen horizontalen Rand 90a auf, der begrenzt ist durch eine vertikale Randfläche 90b. Parallel zu der vertikalen Randfläche 90b erstreckt sich eine weitere vertikale Randfläche 90c. Der Abstand zwischen den beiden vertikalen Kanten 90b und 90c entspricht dem Abstand der Stifte 95, wobei die Stifte 95 sich zwischen den vertikalen Randflächen 90b und 90c längs dieser bewegen können.

Fig. 1 zeigt weiterhin, daß zwischen den Wickeltellern der um die Achse des Zentralrades 50 schwenkbare Schwenkarm 51 angeordnet ist, der das Übertragungszahnrad 52 lagert. Auf dem Schwenkarm 51 sitzt ein Arretierstift 77, der in die Arretiergabel 78 des Schaltorganes 59 eingreift. Durch Einfangen des Arretierstiftes 77 ist die Arretiergabel in der Lage, das Ubertragungszahnrad 52 von den Wickeltellern 42, 43 wegzudrängen und damit die Antriebskupplung zwischen jeweils einem der Wickelteller 42, 43 und dem Servomotor 40 oder dem Zentralzahnrad 50 zu lösen. Der Schwenkarm 51 weist außerdem ein Gelenk 99 auf, an dem ein Stellhebel 100 angreift, der um ein Kipplager 101 verschwenken kann. In einem Gebiet der Verschwenkbewegung des Übertragungszahnrades 52 ist ein feststehendes Zahnsegment 102 angeordnet, an dem sich das Übertragungszahnrad 52 abrollen kann. Hierzu trägt das übertragungszahnrad an seiner Unterseite ein Teilzahnrad 52a. Auf der vom Gelenk 99 abliegenden Seite des Stellhebels 100 trägt der Stellhebel 100 einen Stift 103, der in einem Langloch 104 begrenzt verschieblich ist. Das Langloch 104 befindet sich in einem Schieber 105, der Stifte 106 aufweist, die in Langlöchern 107 der Chassisplatte verschieblich sind, und zwar parallel zum Doppelpfeil 70.

An der Chassisplatte 1 sind um Achsen 108 Exzenterscheiben 109 verschwenkbar, die mit Zahnsegmenten 110 verbunden sind. Diese Zahnsegmente 110 arbeiten zusammen mit Zahnstangen 111 des Schiebers 105. Somit kann durch ein Verschwenken des Stellhebels 100 um das Kipplager 101 der Stift 103 nach Erreichen der einen oder anderen Endkante des Langloches 104 den Schieber 105 in der einen oder anderen Richtung des Doppelpfeiles 70 verschieben. Bei diesem Verschieben findet ein Verdrehen der Exzenterscheiben 109 statt. Die Andruckrollen 17a, 17b sind in Bügeln 112a, 112b gelagert, die ihrerseits um Achsen 113 verschwenkbar sind. Die Achsen 113 sind auf der Kopfplatte 3 angeordnet. Die Bügel 112a und 112b weisen Stifte 114 auf, die die Oberflächen der Exzenterscheiben 109 abfahren können. Die Bügel 112a und 112b werden mit Hilfe von Federn 115a, 115b in Richtung auf die Tonwellen 18a, 18b federbelastet. Die Federn 115a und 115b drücken die Stifte 114 auch immer gegen die Exzenterscheiben 109.

Befindet sich keine Kassette 86 in dem Laufwerk, dann nimmt dieses die in Fig. 5 und 5a dargestellte gegenseitige Stellung der einzelnen Bauteile ein. Soll das Gerät in Betrieb genommen werden, dann wird eine Kassette 86 in den Liftschacht 88 eingeschoben. Bei dem von Hand Einschieben der Kassette nimmt das Kupplungsglied 82 des Liftschachtes 88 die Mitnehmerstange 14a mit. Die Steuerstange 14 bleibt zunächst am Chassis 1 auf Anschlag in ihrem einen Endpunkt C stehen.

In der Auswurf-(Eject-)Stellung der Kassette 86 und des Liftschachtes 88 liegt die Schalternase 71 verschwenkt auf dem Mitnehmerhaken 14g auf. Verschiebt der Liftschacht 88 die Mitnehmerstange 14a in Richtung B, dann gibt der Mitnehmerhaken 14g die Schalternase 71 frei. Dies liefert an die Logikschaltung 46 den ersten Impuls, der die Logikschaltung veranlaßt, den Servomotor 40 zu starten, und zwar zum schnellen Lauf mit einer Antriebsspannung von 12 V und hohem Drehmoment.

In der Auswurf-(Eject-)Stellung (Fig. 5 u d 5a) von Kassette 86 und Liftschacht 88 saß die Klinkenwippe 53 mit ihrem Auflaufwulst 55 auf dem Nocken 56 auf. Damit war die Klinkenwippe 53 gegen die Wirkung der Feder 54 so verschwenkt, daß der Kupplungsnocken 14d aus der Kupplungsausnehmung 14c herausgehoben war. Steuerstange 14 und Mitnehmerstange 14a waren also voneinander entkuppelt. Deshalb konnte die Mitnehmerstange 14a in Richtung des Pfeiles B bewegt werden bei stillstehender Steuerstange 14. Mit dem Starten des Servomotors 40 (der Mitnehmerhaken 14g hat die Schalternase 71 freigegeben, worauf dieser das Einschaltsignal an die Logikschaltung abgab) hatte die Auflaufwulst 55 den Nocken 56 über die schräge Fläche 56a verlassen, und die Wippe hatte die Steuerstange und die Mitnehmerstange durch das Einfallen des Kupplungsnockens 14d in die Kupplungsausnehmung 14c gekuppelt. Über das Servogetriebe 50a, das aus den Zahnrädern 50, 58, 60, 61 besteht, werden nun beide Stangen 14 und 14a in Richtung des Pfeiles nach rechts bewegt. Das Schaltorgan 59 hält den Arretierstift 77 über die Arretiergabel 78 fest, so daß das Übertragungszahnrad 52 mit keinem der Wickelteller kämmt.

Der Kassetteneinzug kann von der gekuppelten Steuerstange 14, 14a unmittelbar vom Hand-Einschub übernommen werden. Auf dem Einzugweg läuft der Auflaufwulst 55 nach einer gewissen Weglänge über eine schräge Fläche 57a auf den Nocken 57 auf. Dadurch werden die Steuerstange 14 und die Mitnehmerrstange 14a wieder entkoppelt. Die Mitnehmerstange 14a bleibt stehen, weil der Liftschacht 88 die Einzugsendstellung erreicht hat. Die Steuerstange 14 läuft jedoch, von dem Servogetriebe 50a weiter angetrieben, weiter nach rechts, bis ihre Vorderkante 14h gegen eine Transportnase 19 des Schenkels 9 der Kopfplatte 3 stößt und diesen bis auf Anschlag gegen ein Ende 74 einer Nut 75 in der Chassisplatte drückt (Fig. 6). In diesem Augenblick hat der Steuerstangennocken 72 die Schalternase 71 so weit verschwenkt, daß der Schalter 70 einen Signalimpuls an die Logikschaltung 46 abgeben kann. Dieser Signalimpuls veranlaßt in der Logikschaltung eine Umkehrung der Drehrichtung des Servomotors 40 und ein Anziehen des Haltemagneten 15. Während die Steuerstange 14 wieder zurückfährt in Richtung des Pfeiles A, bleibt die Kopfplatte aufgrund der Klebekraft des Haltemagneten 15 in ihrer Spielstellung stehen. Der Führungsstift 66 war zwischenzeitlich auf die Führungskante 66a aufgelaufen. Beim Zurückfahren der Steuerstange 14 verläßt der Führungsstift 66 die Führungskante 66a, und die Feder 63 schwenkt das Schaltorgan 59 im Uhrzeigersinn so weit, bis der Anschlagstift 67 das Ende 68a der Nut 68 erreicht. Der Schaltorganhaken 65 ist dabei nach oben geschwenkt und stößt gegen die Schalternase 71 des Schalters 70. Der Schalter 70 gibt wieder einen Signalimpuls ab, der besagt, daß die Funktion des in die Spielstellung-Bringens der Kopfplatte 3 korrekt ausgeführt und der Servomechanismus in seine Abwarte-Stellung gebracht ist. Gleichzeitig kann dieser Signalimpuls, wenn von Anfang an das Kommendo vorlag, einen Abspielvorgang vorzunehmen, das Starten des Abspielvorganges einleiten. Die Kopfplatte ist nämlich aufgrund des Haftens des Haltemagneten 15 in der aus Fig. 6 zu ersehenden Stellung stehen geblieben. Die Spielstellung von Servomechanismus und Laufwerksmechanismus ist in Fig. 7 und 7a dargestellt. Bei dem Verschwenken des Schaltorgans sind weitere mechanische Schaltfunktionen ausgeführt worden. So wurde das Zentralzahnrad 50 vom Zahnrad 58 getrennt. Das Servogetriebe wurde damit ausgeschaltet. Die Arretiergabel 78 hat zugleich den Arretierstift 77 freigegeben. Damit konnte sich das Übertragungszahnrad 52 an einen Wickelteller 42 ablegen, so daß nun der Servomotor den Wickelteller 42 antreibt. Der Servomotor wird umgeschaltet von 12 V Antriebsspannung auf 2 V Antriebsspannung.

Bekommt das Laufwerk von außen über eine von Hand gedrückte Funktionstaste den Befehl zum Anhalten, dann schaltet die Logikschaltung die Haltemagnetvorrichtung aus. Das hat zur Folge, daß die Kopfplatte entgegen dem Uhrzeigersinn verschwenkt und ein Kopf der Kopfplatte 3 über einen Anschlagstift 67 das Schaltorgan 59 entgegen dem Uhrzeigersinn zurück drängt (Fig. 8 und 8a). Der Führungsstift 66 kommt damit vor die Führungskante 66a, und die Gabel 78 fängt den Begrenzungsstift 77 ein, wobei das Übertragungszahnrad 52 vom gerade angetriebenen Wickelteller 42, 43 weggeführt wird. Vom Servogetriebe kommt das Zahnrad 60 mit der Zahnung 14e der Steuerstange 14 in Eingriff. Der Schaltgeber 65 am Schaltorgan 59 ist von der Schaltnase 71 des Schalters 70 weggeschwenkt. Ein infolge des Wegschwenkens vom Schalter 70 abgegebener Schaltimpuls wird von der Logikschaltung 46 als Ausschaltbefehl für den Servomotor 40 und den Tonwellenmotor 41 verstanden. Die Logikschaltung 46 schaltet beide Motoren 40, 41 aus. Das Gerät steht in seiner Stand-By- oder Abwarte-Stellung.

Aus der Stand-By- oder Abwarte-Stellung kann unmittelbar in die Spielstellung übergegangen werden. Durch von Hand Drücken einer außen gelegenen Funktionstaste wird der Servomotor auf 12 V Betriebsspannung eingeschaltet. Das Servogetriebe fährt die Kopfplatte 3 über die Transportnase bis zum Anschlag in die Spielstellung (Fig. 6). Ein Steuerimpuls des Schalters 70 erkennt die Logikschaltung als Signal zur Drehrichtungsumkehr des Servomotors 44 und zum Einschalten der Haltemagnetvorrichtung 15. Die Steuerstange 14 fährt zurück, bis die Führungskante 66a den Führungsstift 66 freigibt und das Schaltorgan unter Belastung durch die Feder im Uhrzeigersinn verschwenkt. Der Schaltgeber 72 veranlaßt das Steuersignal, den Servomotor 40 auf 2 V zurückzuschalten und den Tonwellenmotor 41 einzuschalten. Die Arretiergabel 78 gibt den Begrenzungsstift 77 frei, und das Übertragungszahnrad 52 legt sich an den jeweiligen Wickelteller 42, 43 zum Antreiben an. Beim Schwenken des Schaltorganes 59 wurde der Servoantrieb von der Zahnung 14e der Steuerstange 14 entkuppelt (Fig. 9 und 9b). Das Laufwerk läuft im Spielbetrieb.

Das Umschalten der Antriebsspannung des Servomotors zwischen 2 V und 12 V ist wichtig, da beim Ausführen von Servofunktionen ein hohes Drehmoment benötigt wird. Beim Antrieb der Wickelteller 42, 43 im Spielbetrieb wird nur ein niedriges Drehmoment benötigt.

Gleichzeitig mit dem Übertragen von der Stand-By-Stellung in die Spielstellung hat eine Druckrollenverstellung stattgefunden. Durch das Freigeben des Begrenzungsstiftes 77 hat der Stellhebel 100 den Schieber 105 in Richtung eines Pfeiles 120 nach links verschoben. Die Zahnstangen 111 haben über die Zahnsegmente 110 die Exzenterscheiben 109 im Uhrzeigersinn verdreht. Dabei hat der Stift 114 des rechts gelegenen Bügels 112a die Oberfläche 121 des Exzenters 109 verlassen und ist gegen eine Kante 122 aufgelaufen, wobei die Feder 115a den Stift 114 ständig gegen die Kante 122 drückt. Gleichzeitig ist die Andruckrolle 17a damit gegen die Tonwelle 18a angelegt worden. Das Ablaufen des Stiftes 114 von der Oberfläche 121 über eine Ecke 123 zu der Kante 122 hat gleichzeitig zur Folge gehabt, daß die zuvor von dem Stellhebel 100 eingeleitete Verschiebung des Schiebers 105 in Richtung des Pfeiles 120 nun von dem Stift 114 übernommen wurde. Während nun der Stift 114 der rechten Exzenterscheibe 109 auf die niedrigere Kante 122 aufgelaufen ist, ist der Stift 114 der linken Exzenterscheibe 109 von der Kante 122 über die Ecke 123 auf die Oberfläche 121 aufgelaufen. Dies hat bewirkt, daß der Bügel 112b im Uhrzeigersinn gegen die Kraft der Feder 115b verschwenkt wurde und sich die Andruckrolle 17b von der Tonwelle 18b abgehoben hat Parallel dazu hat sich die Andruckrolle 17a an die Tonwelle 18a angelegt. Die Bandlaufrichtung wurde also umgekehrt.

Die Steuerung des Gerätes erfolgt immer über die Logikschaltung 46. Alle Steuerbefehle von außen gehen über Tasten oder dergl., und alle inneren Steuerbefehle gehen vom Schalter 70 zur Logikschaltung. Soll die Laufrichtung des Gerätes umgekehrt werden, dann wird entweder bei Bandende oder von einer Taste über die Logikschaltung an den Motor 40 der Befehl gegeben, seine Drehrichtung umzukehren. Diese Drehrichtungsumkehr bewirkt an den dem Bandtransport dienenden Teilen, daß der Stellhebel 100 zunächst den Schieber 105 in Richtung eines Pfeiles 124 verstellt, bis an der linken Exzenterscheibe 109 der Stift 114 über die Ecke 123 hinweg gelaufen ist und der Stift 114 dann über die Kante 122 die weitere Verschiebung des Schiebers 105 in Richtung des Pfeiles 124 übernommen hat. Dabei hat sich die Andruckrolle 17a von der Tonwelle 18a gelöst, während sich die Andruckrolle 17b an die Tonwelle 18b angelegt hat. Gleichzeitig ist das Übertragungszahnrad 52 von dem Wickelteller 42 übergeschwenkt zu dem Wickelteller 43.

Soll der Spielbetrieb beendet werden, was beispielsweise durch ein Tasten-Eindrücken oder ein Ausbleiben der Betriebsspannung geschehen kann, dann wird die Haltemagnetvorrichtung 15 entregt, und die Kopfplatte 3 verschwenkt unter der Wirkung der Feder 37 entgegen dem Uhrzeigersinn.

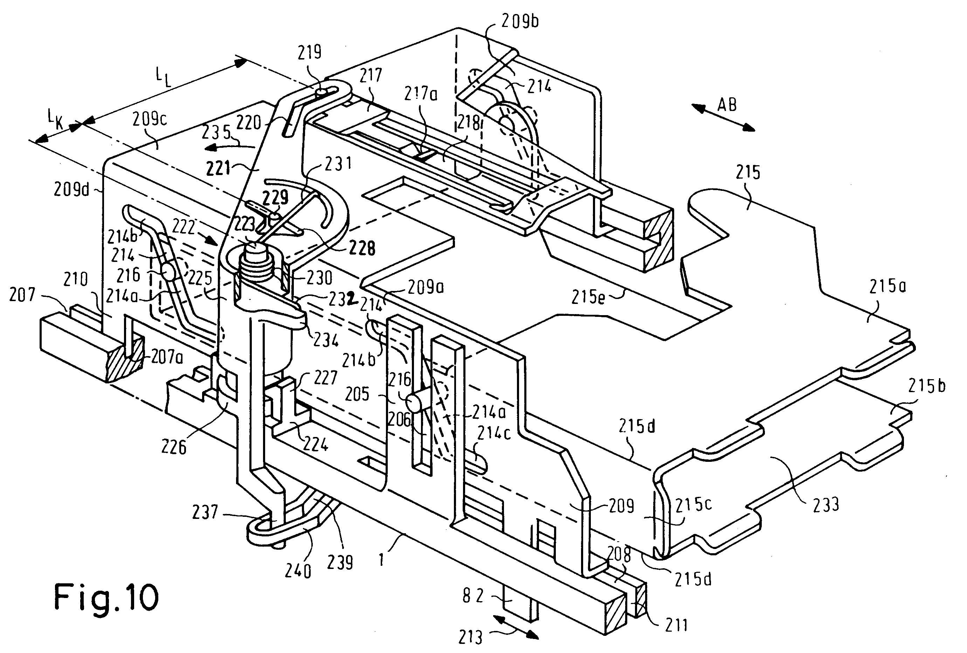

In Fig. 10 ist schaubildlich eine zweite Ausführungsform eines Lademechanismus dargestellt. Dieser Lademechanismus ist auf der Chassisplatte 1 aufgebaut. Auf der Chassisplatte 1 ist wenigstens eine vertikal stehende Stützplatte 205 vorgesehen, die mit einem vertikalen Stützplattenschlitz 206 versehen ist. In der Chassisplatte 1 sind Führungen 207 und 208 vorgesehen, die einen Schieber 209 in Einzug- und Auswerfrichtung AB vertikal stehend und an der vertikalen Stützplatte 205 anliegend führen. Die Führung 207 besteht aus einer Nut 207a, in der ein Steg 210 des Schiebers 209 in der Verschieberichtung AB verschieblich ist. Die Führung 208 besteht aus einem Schlitz 211 in der Chassisplatte 1, durch den ein Kupplungssteg 82 des Schiebers 209 hindurchgreift. Der Kupplungssteg 82 ist in Richtung eines Doppelpfeiles 213 hin und her schiebbar. Die Bewegungsrichtung entspricht der Einzugs- und Auswerfrichtung AB.

Der Schieber ist mit wenigstens zwei Liftschlitzen 214 auf der vorn liegenden Seite der Darstellung versehen. Ein dritter Liftschlitz 214 kann auf der gegenüberliegenden Seite des Schiebers angeordnet sein. Jeder Liftschlitz 214 besteht aus einem Mittelteil 214a, das gegenüber dem vertikalen Verlauf des Stützplattenschlitzes 206 geneigt ist um einen bestimmten Neigungswinkel von beispielsweise 8°. Alle Mittelteile 214a sind um den gleichen Neigungswinkel gegenüber der Vertikalen geneigt. An die geneigten oberen Enden der Mittelteile 214a der Liftschlitze 214 schließen sich im wesentlichen horizontale, zur Mechanismus-Hinterseite verlaufende hintere Schlitzenden 214b an, die eine Überhubtoleranz für die Auswerfbewegung des Schiebers sichern. An die unteren Enden der Mittelteile 214a schließen sich in Absenkrichtung geneigt nach vorn verlaufende vordere Schlitzenden 214c an, die eine Überhubtoleranz für das Ende der Einzugbewegung sicherstellen.

Der Liftschieber weist außer seinem vorn liegenden vertikalen Schieberplattenteil 209a ein rückwärtiges, vertikal stehendes Plattenteil 209b auf. Beide Plattenteile 209a und 209b sind über wenigstens eine im wesentlichen horizontal liegende Schieberverbindungsplatte 209c verbunden. Ebenso kann noch an den hinteren Rändern 209d eine die hinteren Ränder verbindende Rückplatte vorgesehen sein.

Zwischen den Schieberplattenteilen 209a und 209b ist ein Kassettenschacht 215 angeordnet. Dieser Kassettenschacht 215 besteht im wesentlichen aus zwei in horizontalen Ebenen auf Abstand übereinander angeordneten Leitplatten 215a, 215b, die über Längskanten 215d mittels Führungsplatten 215c verbunden sind. Die vorn dargestellte Führungsplatte 215c weist zwei Bolzen 216 auf, die seitlich aus ihr hervorstehen und die Liftschlitze 214 durchgreifen. Ein dritter Bolzen 216 greift in den dritten Schlitz 214 des Schiebers 209 im Plattenteil 209b ein. Im vorderen Teil des Lademechanismus durchgreifen die Bolzen 216 den Liftschlitz 214 und den Stützplattenschlitz 206. Durch ein Vor- und Zurückschieben des Schiebers 209 mittels des Kupplungssteges 212 wird der Kassettenschacht 215 auf und ab bewegt.

Zum Einziehen und Auswerfen einer Kassette dient ein Kassettenmitnehmer 217, der in einem Führungsschlitz 218 der Schieberverbindungsplatte 209c geführt ist. Der Führungsschlitz 218 verläuft in Richtung der Doppelpfeile 213 bzw. AB.

Der Kassettenmitnehmer 217 ist mit einem Mitnehmerstift 219 versehen, der durch einen Schlitz 220 eines Betätigungshebels 221 hindurchgreift. Dieser Betätigungshebel 221 weist eine Lagerung 222 auf. Diese Lagerung 222 besteht aus einem aufrecht stehenden Dom 223, der an einer mit der Chassisplatte 1 verbundenen Stütze 224 vorgesehen ist. Vorzugsweise handelt es sich dabei um ein an die Chassisplatte 1 angespritztes Spritzteil. Um den Dom 123 herum erstreckt sich eine Lagerhülse 225, die Bestandteil des Betätigungshebels 221 ist. Die Lagerhülse 225 weist an ihrem unteren Ende einen Wulst 226 auf, der von einem Überwurfhaken 227 der Stütze 224 übergriffen wird.

In dem Betätigungshebel 221 befindet sich ein Führungsschlitz 228, durch den ein an der Schieberverbindungsplatte 209a angeordneter Kupplungsstift 229 hindurchgreift.

Der Dom 223 befindet sich seitlich des Schiebers 209. Durch das Kuppeln des Schiebers über den Kupplungsstift 229 mit dem Betätigungshebel 221 entstehen zwei unterschiedlich lange Hebelarme Lₖ und Lₗ, die für den Verschiebeweg des Kassettenmitnehmers 217 von Bedeutung sind. Kurze Schieberbewegungen verursachen bereits lange Verstellwege des Kassettenmitnehmers 217.

In dem oberen Teil der Lagerung 222 ist auf den Dom 223 zunächst eine Rückführfeder 230 aufgesetzt. Die Hülse 225 des Betätigungshebels 221 greift über diese als Wendelfeder ausgebildete Rückführfeder 230 hinweg. Die Wendelfeder hat an ihren Enden je einen Endarm 231 und 232. Der Endarm 231 liegt von der Einschubseite 233 des Kassettenschachtes 215 her gesehen an dem Kupplungsstift 229 an. Der andere Endarm stützt sich an einem Ausleger 234 der Lagerhülse 225 ab. Die Anordnung wirkt dabei als Rückführanordnung für die Kassette, falls der Einzugsmechanismus des Magnetbandgerätes nicht anspricht.

Der Kassettenlademechanismus arbeitet wir folgt: In die Einschubseite 233 des Kassettenschachtes 215 wird eine Magnetbandkassette 86 eingeschoben. Die Bolzen 216 des Kassettenschachtes 215 befinden sich in den hinteren Schlitzenden 214b der Liftschlitze 214. Die in Einschubrichtung vorn liegende Wickelspulenöffnung der nicht dargestellten eingeschobenen Kassette unterfährt einen Greifhaken 217a des Kassettenmitnehmers 217, bis dieser in die Wickelspulenöffnung der Kassette einfällt. Beim weiteren Einschieben nimmt der Kassettenmitnehmer dann den Betätigungshebel entgegen dem Uhrzeigersinn in Richtung eines Pfeiles 235 mit. In diesem Zeitpunkt ist vorgesehen, daß der Einzugsmechanismus des Magnetbandgerätes angeschaltet wird und dieser den Kupplungssteg 82 in Einzugsrichtung mitnimmt. Wird der Einzugsmechanismus in Betrieb gesetzt und fährt der Schieber 209 nach hinten, dann fährt auch der Kupplungsstift 229 nach hinten. Der Schieber kann so bis in seine hintere Endstellung fahren, wobei der Kassettenschacht 215 über die Bolzen 216 in den Liftschlitzen 214 abgesenkt wird.

Spricht der Lademechanismus nicht an und bleibt der Schieber 209 damit in seiner Ausgangsstellung stehen, dann bleibt auch der Kupplungsstift 229 stehen, und die Wendelfeder 230 spannt sich beim Einschieben der Kassette von Hand zwischen dem Kupplungsstift 229 und dem Ausleger 234. Dies hat zur Folge, daß der Betätigungshebel 221 die Kassette wieder zurückstößt, sobald die Einschiebekraft aufhört. Diese Einschiebekraft wird von der Hand des Benutzers ausgeübt. Bei einem Gerätefehler kann die Kassette also niemals innerhalb des Schachtes verschwinden.

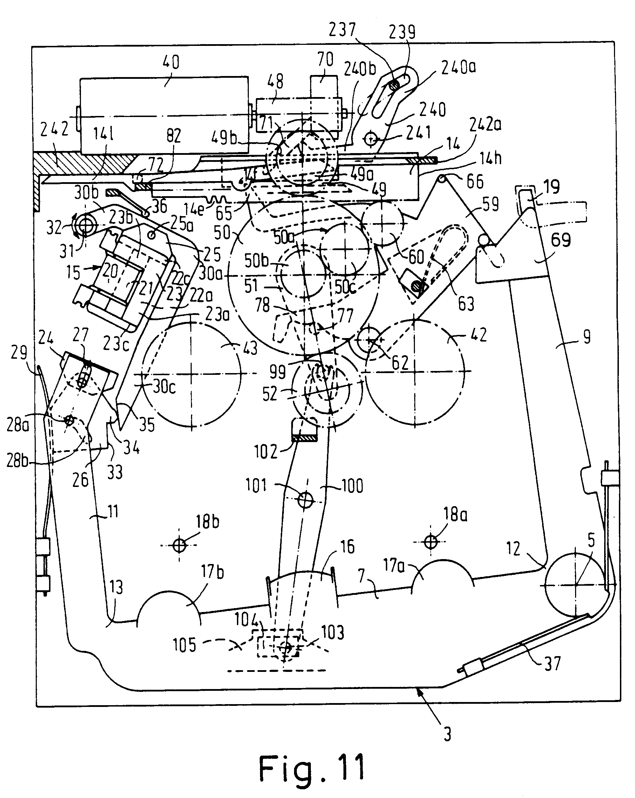

Wie Fig. 10 zeigt, ist an der Hülse 225 ein Schaltstift 237 angeordnet, der auf der anderen Seite der Chassisplatte 1 in einen Mitnehmerschlitz 239 eines Schalthebels 240 eingreift. Wie Fig. 11 zeigt, ist der Schalthebel 240 um eine Achse 241 verschwenkbar. Der Schalthebel 240 ist ein doppelarmiger Hebel mit einem ersten Hebelarm 240a, in den der Schaltstift 237 eingreift, und einem zweiten Hebelarm 240b, der ein Schaltstück 260 trägt, das auf die Schaltnase 71 einwirken kann.

Fig. 11 zeigt die zweite Ausführungsform des Geräte-Servomechanismus, der in vielen Teilen dem Mechanismus nach Fig. 5 bis 9 entspricht. In der Funktion gleiche Teile sind deshalb mit den Bezugsziffern der Fig. 1 bis 9 versehen. Wie in Fig. 5, treibt der Servomotor 40 das Zentralzahnrad 50 und über dieses das Servogetriebe 50a an. Die Steuerstange 14 kann die Kopfplatte 3 im Uhrzeigersinn verschwenken und die Schaltnase 71 des Schalters 70 in der Verschwenkendstellung zum Anziehen der Haltemagnetvorrichtung veranlassen. Ein Schaltorgan 59 sorgt, wenn die Steuerstange in die Spielstellung einläuft, außer dem Betätigen der Schaltnase 71 für das Umschalten des Servogetriebes 50a vom Steuerstangenantrieb auf den Wickeltellerantrieb.

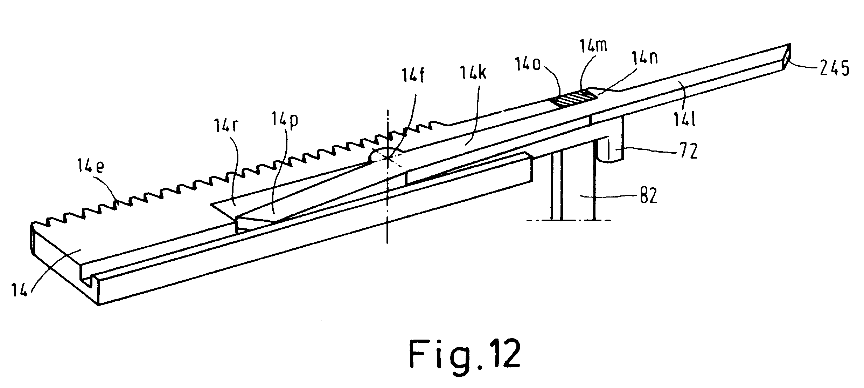

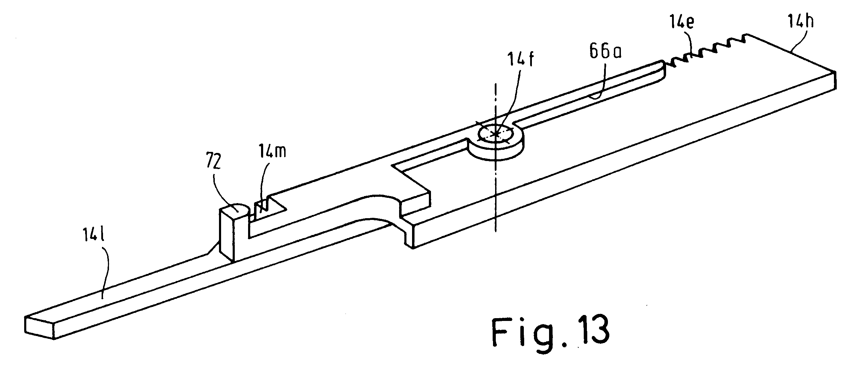

Wie Fig. 12 und 13 zeigen, ist die Steuerstange 14 mit einer Zahnung 14e versehen. Auf der Steuerstange ist verschwenkbar um eine Achse 14f eine Mitnehmerstange 14k gelagert. Die Mitnehmerstange 14k ist mit einer Verlängerung 141 versehen, die im wesentlichen in Längsrichtung deutlich über die Steuerstange 14 in Einzugsrichtung vorsteht. An der Mitnehmerstange 14k befindet sich zur Ausbildung einer Mitnehmermulde 14m eine Kupplungsnase 14n, die sich in der Kupplungsposition, die in Fig. 12 dargestellt ist, in einem Abstand von einer Endfläche 14o der Steuerstange 14 befindet, wobei sich zwischen der Kupplungsnase 14n, der Endlfäche 14o und der Steuerstange 14 die Mulde 14m ausbildet. Die Verlängerung 141 wirkt derart mit am Laufwerk angeordneten Führungen 242 zusammen, daß diese Führungen 242 die Mitnehmerstange 14k zum Einfangen in oder Freigeben aus der Mulde 14m des Kupplungsgliedes 82 verschwenken. Zur Erzielung einer gewissen Führungssicherheit ist die Mitnehmerstange 14k in Längsrichtung federnd nachgiebig ausgebildet. Eine zu starke Auslenkung in Richtung auf eine Auflösung der Mitnehmermulde 14m wird durch einen Hebelarm 14p der Mitnehmerstange 14k vermieden, der beim Ausschwenken im Uhrzeigersinn (nach Fig. 12) gegen eine Wand 14r der Steuerstange 14 aufläuft. An der Steuerstange 14 ist ein Nocken 72 vorgesehen, der in der noch zu beschreibenden Endstellung der Steuerstange 14, bei der die Kopfplatte 3 in ihre Spielstellung gedrückt ist, gegen die Schalternase 71 drückt.

Das Schaltorgan 59 trägt von dem Servogetriebe 50a nur das Zahnrad 60, das mit der Zahnung 14e der Steuerstange 14 in Eingriff bringbar ist. Das gesamte Servogetriebe 50a besteht aus einem auf der Welle des Zentralzahnrades 50 angeordneten Ritzel 50b, einem am Chassis 1 drehbar gelagerten Zwischenzahnrad 50c, dem Zahnrad 60 einerseits, das am Schaltorgan 59 gelagert ist und dem Servoantrieb dient, und dem Übertragungszahnrad 52, das dem Wickeltellerantrieb dient. Das Schaltorgan 59 seinerseits ist um eine Achse 62 drehbar und wird mit Hilfe einer Feder 63 im Uhrzeigersinn belastet. Am Schaltorgan 59 ist ein Schaltorganhaken 65 angeordnet, der auf die Schalternase 71 einwirken kann.

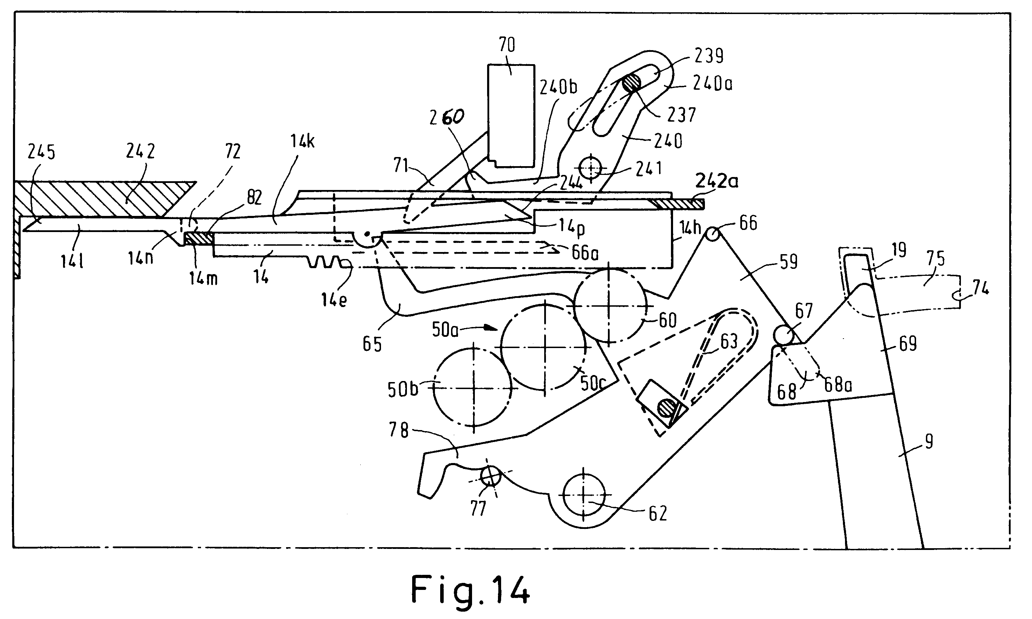

Fig. 11 und 14 zeigen den Servomechanismus in derselben Stellung, und zwar in der Eject-Stellung, in der sich im Kassettenschacht 215 keine Kassette 86 befindet. Soll das Laufwerk in Betrieb genommen werden, dann wird eine Kassette 86 in den Schlitz 233 eingeschoben. Der Federbügel 217a des Kassettenmitnehmers 217 springt nach einer gewissen Einschiebbewegung in das erste Wickelloch der Kassette. Der Kassettenmitnehmer 217 wird danach mit der von Hand eingeschobenen Kassette nach hinten geschoben, und der Betätigungshebel 221 schwenkt in Richtung des Pfeiles 235. Dies hat zur Folge, daß sich auch die Hülse 225 in Richtung des Pfeiles 235 entgegen dem Uhrzeigersinn dreht und der Schaltstift 237 den Schalthebel 240 ebenfalls entgegen dem Uhrzeigersinn um die Schalthebelachse 241 verschwenkt. Das Schaltstück 260 am zweiten Hebelarm 240b entfernt sich damit von der Schaltnase 71, und die Schaltnase 71 folgt dem Schaltstück 260 von selbst, bis sie in ihrer vom Schalter 70 vorgegebenen Mittelstellung stehen bleibt. Im Augenblick des Stehenbleibens gibt der Schalter 70 einen Impuls an den Mikroprozessorr 46, der veranlaßt, daß der Servomotor 40 in Betrieb gesetzt wird. Der Servomotor 40 dreht damit das Zentralzahnrad 50. Dieses Zentralzahnrad 50 dreht seinerseits das Ritzel 50b, das Zwischenzahnrad 50c und das mit der Zahnung 14e in Eingriff befindliche Zahnrad 60. Die Steuerstange 14 wird somit aus der Stellung nach den Fig. 11 und 14 nach rechts bewegt. Das Schaltorgan 59 hält das Servogetriebe 50a mit der Zahnung 14 in Eingriff, weil der Anschlagstift 67 auf dem Schaltorgan 59 auf dem Kopf 69 des Kopfplattenschenkels 9 aufliegt.

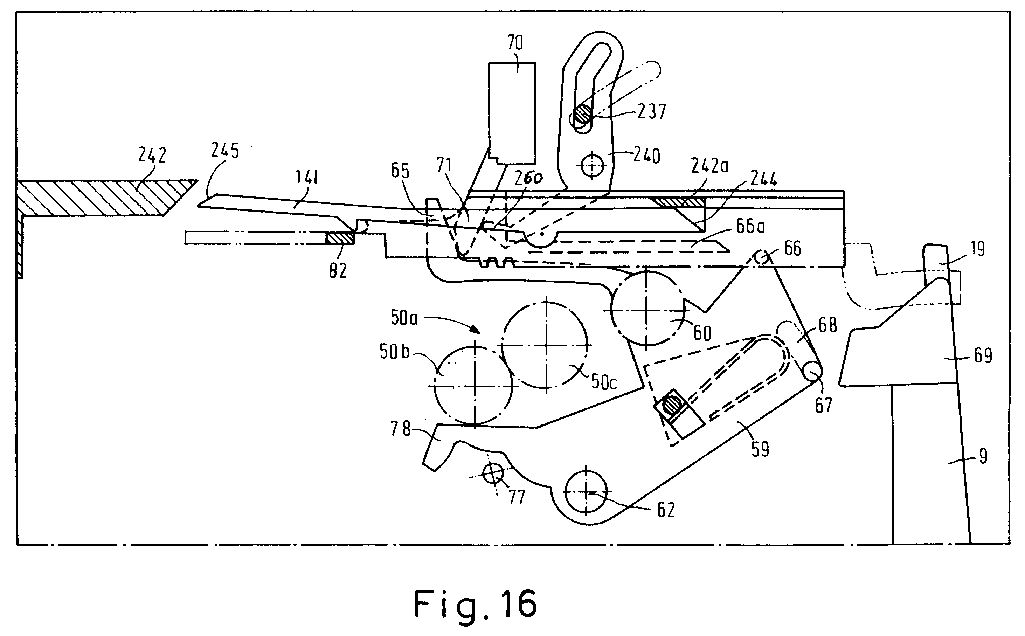

Aus Fig. 14 ist zu erkennen, daß die Verlängerung 141 der Mitnehmerstange 14k von der Führung 242 im Uhrzeigersinn belastet ist, so daß das Kupplungsglied 82 in der Mulde 14m gefangen ist. Fährt die Steuerstange 14 nun bei auf 12 V hochgeschalteter Servomotorspannung nach rechts, dann läuft eine Abweiserkante 244 des Mitnehmerstangenteiles 14p auf die Führung 242a auf. Dadurch kippt die Mitnehmerstange 14k, wie aus Fig. 16 zu ersehen ist, um und gibt das Kupplungsglied 82 frei.

Die Steuerstange 14 fährt nun weiter nach rechts und stößt schließlich mit ihrer Vorderkante 14h gegen die Transportnase 19 der Kopfplatte 9. Zuvor ist der Führungsstift 66 auf die Führungskante 66a aufgelaufen, wodurch das Schaltorgan 59 an einem Verschwenken im Uhrzeigersinn gehindert wird. In dem Augenblick, in dem die Transportnase 19 der Kopfplatte 9 in die Spielstellung geschoben worden ist, hat auch der Steuerstangennocken 72 die Schaltnase 71 des Schalters 70 verschwenkt und gegen das Schaltstück 260 gedrückt. Der Schalter 70 hat damit erneut ein Signal an den Mikroprozessor 46 abgegeben, der seinerseits den Servomotor veranlaßt, seine Drehrichtung umzukehren.

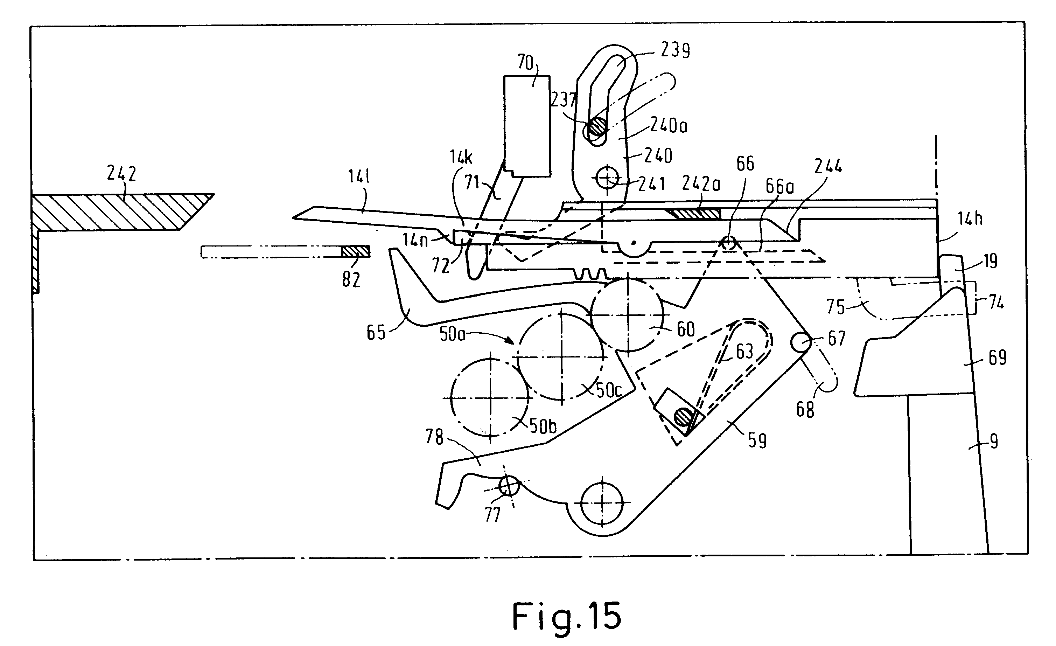

Aus der Stellung nach Fig. 15, in der die Kopfplatte in die Spielstellung geschoben worden ist und zugleich die Haltemagnetvorrichtung die Kopfplatte nun in der Spielstellung festhält, fährt der Servomotor 40 die Steuerstange 14 wieder nach links in eine Stellung, die aus Fig. 16 zu ersehen ist. Da der Kopf 69 des Schenkels 9 beim in Spielstellung Bringen der Kopfplatte mit nach rechts gewandert ist, hat der Anschlagstift 67 seinen Halt am Kopf 60 verloren. Dies ist zunächst auch ohne Bedeutung, da das Schaltorgan mit seinem Führungsstift 66 an der Führungskante 66a anliegt und damit weiterhin gegen ein Verschenken gesichert bleibt. Diese Sicherung bleibt so lange aufrecht erhalten, bis - bei weiter nach links fahrender Steuerstange 14 - der Führungsstift 66 von der Führungskante 66a abläuft. Dadurch wird das Schaltorgan 59 zum Verschwenken frei und verschwenkt im Uhrzeigersinn, soweit es der Schlitz 68 in der Chassisplatte 1 zuläßt.

Das Verschwenken des Schaltorganes 59 hat dreierlei bewirkt. Zum ersten ist das Zahnrad 60 aus der Eingriffsstellung mit der Zahnung 14e herausgefahren. Zum zweiten hat die Arretiergabel 78 den Arretierstift 77 freigegeben, so daß sich nun das Übertragungszahnrad 52 an einen der Wickelteller 42 oder 43 anlegen konnte. Zum dritten hat schließlich der Schaltorganhaken 65 erneut die Schaltnase 71 des Schalters 70 angeschlagen, so daß der Schalter 70 wiederum ein Signal an den Mikroprozessor abgeben konnte. Der Mikroprozessor schaltet aufgrund dieses Anschlagens den Antriebsmotor 41 für die Tonwellen an und den Servomotor von 12 V auf 2 V um. Gleichzeitig hat auch der Stellhebel 100 die gewünschte Andruckrolle an die ihr zugeordnete, nun umlaufende Tonwelle angelegt.

Der Musik-Suchlauf (MSS) benötigt keine Veränderung des Servomechanismus aus der Stellung nach Fig. 16 heraus. Der Musik-Suchlauf wird allein über die Haltemagnetvorrichtung erreicht, indem die ein bißchen abkippende Kopfplatte sofort wieder gefangen und festgehalten wird. Erst wenn der Musik-Suchlauf zu Ende ist, wird der Servomotor 40 erneut eingeschaltet und die Steuerstange 14 gegen die Transportnase 19 gedrückt, bis die Kopfplatte wieder ihre Spielstellung erreicht hat und die Haltemagnetvorrichtung 15 das Festhalten in der Spielstellung vorgenommen hat.

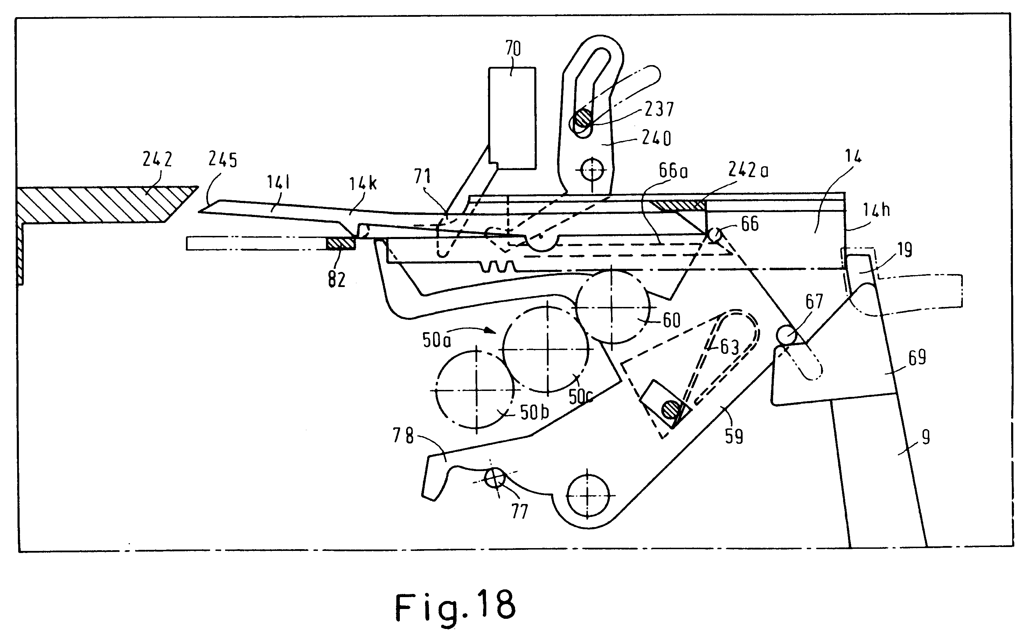

Ist der Spielvorgang einer Kassette beendet, beispielsweise durch Drücken einer Taste, dann fällt nach einem Entregen der Magnethaltevorrichtung 15 die Kopfplatte ab und erreicht die aus Fig. 18 ersichtliche Stellung. In dieser sogenannten Stand-By-Stellung sind die Wickelteller entkuppelt, da die Arretiergabel 78 über den Arretierstift 77 den Schwenkarm so verschwenkt hat, daß das Übertragungszahnrad 52 aus seinem Eingriff in einem der Wickelteller herausgedrückt worden ist. Die Kassette ist nach wie vor eingeschoben, und der Spielvorgang kann durch ein Tastenkommando von außen wieder in Gang gesetzt werden, wobei die Steuerstange 14, wie in Fig. 15, voll nach rechts gefahren wird, bis die Kopfplatte wieder in ihrer Spielstellung ist. Soll aus dieser Stand-By-Stellung heraus die Kassette ausgefahren werden, dann startet ein vom Mikroprozessor ausgegebenes Auswurfkommando den Servomotor 40, und das Servogetriebe 50a fährt die Steuerstange 14 nach links. Das hat zur Folge, daß der Arm 14p der Mitnehmerstange 14k von der Führung 242a freigegeben wird und die Führung 242 durch einen Druck auf das freie Ende 245 das Kupplungsglied 82 wieder in der Mulde 14m eingefangen hat. Das Kupplungsglied 82 wird nun in Auswerfrichtung bewegt, der Kassettenschacht 250 hebt sich an, und der Stift 229 bewegt den Betätigungshebel 221 in Auswerfrichtung. Der Kassettenmitnehmer 217 schiebt die Kassette dann in Auswerfrichtung, bis diese Schließlich von Hand entnommen werden kann.

## Patentansprüche

1. Magnetbandkassettengerät mit einer Steuervorrichtung zum Steuern von Laufwerksfunktionen einschließlich des Einziehens und Auswerfens einer Kassette (86) mittels eines mit einem Motor (40) ausgerüsteten Antriebes, der eine von einem Servomotor (40) hin und her längsverschiebliche Steuerstange (14) umfaßt, die auf ihrer Bewegungsbahn zwischen Endpunkten verfahrbar ist und in bestimmten Betriebspositionen Laufwerksfunktionen steuert in Verbindung mit Schaltgebern und einer Logikschaltung, dadurch gekennzeichnet, daß
- auf der Steuerstange (14) in deren Längsrichtung eine Mitnehmerstange (14a) beweglich geführt ist,
- die Mitnehmerstange (14a) mit der Steuerstange (14) verriegelbar ist längs einer Teilstrecke der Bewegungsbahn der Steuerstange,
- die Mitnehmerstange (14a) mit dem Lademechanismus des Laufwerkes mechanisch gekuppelt ist,
- die Mitnehmerstange (14a) und die Steuerstange (14) mit an ihnen vorgesehenen Schaltgebern zur Auslösung von Schaltsignalen einen Steuerschalter (70) beaufschlagen, der die von den Schaltgebern (14g, 72) vermittelten Befehle der Logikschaltung zuleitet, die daraus Schaltkommandos für Gerätefunktionen bildet.

2. Magnetbandkassettengerät mit einer Steuervorrichtung zum Steuern von Laufwerksfunktionen einschließlich des Einziehens und Auswerfens einer Kassette (86) mittels eines mit einem Motor (40) ausgerüsteten Antriebes, der eine von einem Servomotor (40) hin und her längsverschiebliche Steuerstange (14) umfaßt, die auf ihrer Bewegungsbahn zwischen Endpunkten verfahrbar ist und in bestimmten Betriebspositionen Laufwerksfunktionen steuert in Verbindung mit Schaltgebern und einer Logikschaltung, dadurch gekennzeichnet, daß
- an der Steuerstange (14) eine Mitnehmerstange (14k) angeordnet ist, die zur Längsbewegungsrichtung der Steuerstange (14) quer beweglich ist,
- die Mitnehmerstange (14k) mit dem Lademechanismus des Laufwerkes kuppelbar ist,
- die Mitnehmerstange (14k) durch Querbewegungen mit dem Lademechanismus kuppel- bzw. von ihm entkuppelbar ist mit Hilfe von am Laufwerk ortsfest angeordneten Führungen (242, 242a),
- wenigstens die Steuerstange (14) mit wenigstens einem an ihr vorgesehenen Schaltgeber (72) zur Auslösung von Schaltsignalen einen Steuerschalter (70) beaufschlagt, der die von dem Schaltgeber (72) vermittelten Befehle der Logikschaltung zuleitet, die daraus Schaltkommandos für Gerätefunktionen bildet.

3. Gerät nach Anspruch 1 oder 2, dadurch gekennzeichnet, daß alle Schaltgeber (14a, 14g, 65, 72) der Steuervorrichtung einen einzigen Steuerschalter (70) beaufschlagen, der über die Logikschaltung alle elektrischen Steuerfunktionen des Laufwerkes steuert.

4. Gerät nach Anspruch 1 oder 2, dadurch gekennzeichnet, daß die Steuerstange (14) und die Mitnehmerstange (14a,14k) wenigstens an den Endpunkten (C, D) ihrer Bewegungsbahn voneinander entkuppelt sind, damit ihre Schaltgeber (14g, 72) unabhängig von der Stellung der jeweils anderen Stange den Steuerschalter (70) beaufschlagen können.

5. Gerät nach Anspruch 1, dadurch gekennzeichnet, daß auf der Steuerstange (14) eine zweiarmige Klinkenwippe (53) angeordnet ist, deren erster Klinkenarm (53a) federbelastet bestrebt ist, zur Kupplung von Steuerstange (14) und Mitnehmerstange (14a) in eine Ausnehmung (14c) der Mitnehmerstange (14a) einzufallen, und deren zweiter Klinkenarm (53b) mit ortsfesten Führungen (56, 57) zusammenwirkt, die die Klinkenwippe (53) gegen Federkraft unter ihrer Wirkung so verschwenken, daß der erste Klinkenarm (53a) nicht in die Ausnehmung (14c) einfallen und damit nicht kuppeln kann.

6. Gerät nach Anspruch 1 oder 2, dadurch gekennzeichnet, daß der Steuerschalter (70) eine Schaltnase (71) aufweist, die mechanisch unbelastet in einer neutralen Mittelstellung steht und die von den Schaltgebern (14g, 14a, 65, 72) beim Freigeben oder Anstoßen in der einen oder anderen Verstellrichtung der Steuerstange Schaltimpulse abgibt.

7. Gerät nach Anspruch 1 oder 2, dadurch gekennzeichnet, daß die Steuerstange (14) eine Zahnstangenzahnung (14e) aufweist und ein Zahnrad (60) des Servogetriebes mit dieser Zahnstangenzahnung (14e) zusammenwirkt.

8. Gerät nach einem der Ansprüche 1 oder 2, dadurch gekennzeichnet, daß die Steuerstange (14) bei ihrer Längsbewegung in Einzugsrichtung einer Kassette (86) nach einem Entkuppeln von dem Lademechanismus bis zu einem Endpunkt ihrer Bewegungsbahn frei vom Lademechanismus verfahrbar ist, und zwar so weit, daß sie gegen einen Schenkel (9) der Kopfplatte (3) des Gerätes stößt und die Kopfplatte (3) damit in ihrer Spielstellung verschwenkt, wobei ein Schaltgeber an der Steuerstange (14) den Steuerschalter (70) anstößt, um eine Drehrichtungsumkehr des Servomotors zu bewirken.

9. Gerät nach Anspruch 1, dadurch gekennzeichnet, daß die Mitnehmerstange (14a) mit einem Schaltgeber (14g) versehen ist, der beim Einschieben der Kassette (86) den Steuerschalter (70) zur Abgabe eines Anlaufimpulses und beim Ausschieben zur Abgabe eines Ausschaltimpulses für den Servomotor (40) veranlaßt.

10. Gerät nach den Ansprüchen 2 und 3, mit einem Betätigungshebel (221), der seitlich des Lademechanismus drehbeweglich gelagert ist und über den Lademechanismus greifend auf einen Kassettenmitnehmer (217) einwirkt, der vom Betätigungshebel (221) zwischen einer Auswurf- und einer Einzugstellung bewegbar ist, dadurch gekennzeichnet, daß der Betätigungshebel (221) mit einem als Schaltgeber wirkenden Schaltstift (237) auf den einzigen Steuerschalter (70) einwirkt zur Abgabe von Start- und Stopimpulsen.

11. Gerät nach Anspruch 1 oder 2, dadurch gekennzeichnet, daß ein um eine Achse (62) verschwenkbares Schaltorgan (59) des Servogetriebes vorgesehen ist, das ebenfalls einen Schaltgeber (65) für den einen Steuerschalter (70) aufweist, der nach Abschluß der Servobewegungen des Servomechanismus der Logikschaltung (46) durch Anstoßen des Steuerschalters (70) das Signal übermittelt, daß Servovorgänge, wie Kassette einziehen oder Kopfplatte in Spielstellung bringen, abgeschlossen sind.

12. Gerät nach Anspruch 11, dadurch gekennzeichnet, daß das schwenkbare Schaltorgan (59) mit einem von ihm getragenen Servozahnrad (60), das die Verbindung zwischen dem Servomotor (40) und der Zahnung (14e) der Steuerstange (14) herstellen kann, von der Steuerstange (14) selbst in der Servoantriebsstellung gehalten werden kann und zum Umschalten von Servobetrieb auf Spielbetrieb aus dieser Verbindung von der Steuerstange (14) freigebbar ist zum Verschwenken und Bewirken des Umschaltens bei gleichzeitiger Betätigung des Steuerschalters (70).

13. Gerät nach Anspruch 11, dadurch gekennzeichnet, daß das Schaltorgan (59) einen Anschlagstift (67) aufweist, der in Verbindung mit dem Schenkel (9) der Kopfplatte (3) den Servomechanismus mit der Steuerstange (14) in Eingriffstellung hält oder zum Umschalten freigibt.

14. Gerät nach Anspruch 12, dadurch gekennzeichnet, daß das Schaltorgan (59) beim Verschwenken einen Mitnehmerstift (99) eines Umlenkgetriebes (100) aus einer gabelförmigen Halterung (78) freigibt, damit das Umlenkgetriebe (100) ein Übertragungszahnrad (52) an den einen oder anderen Wickelteller (42, 43) anlegen kann zum Kuppeln des Zentralrades (50) mit einem der Wickelteller (42, 43).

15. Gerät nach Anspruch 13, dadurch gekennzeichnet, daß das Schaltorgan (59) mit einem Führungsstift (66) versehen ist, der beim Bewegen der Steuerstange (14) hinter eine Führungskante (66a) der Steuerstange (14) greift und dadurch das Schaltorgan (59) in einer Schwenklage hält, in der das Servogetriebe (50a) die Steuerstange (14) antreibt und das Umlenkgetriebe (52) außer Eingriff ist mit den Wickeltellern (42, 43).

16. Gerät nach Anspruch 2, dadurch gekennzeichnet, daß die Mitnehmerstange (14k) an der Steuerstange (14) schwenkbar gelagert ist und eine Mitnehmermulde (14m) seitlich einer Endfläche (14o) der Steuerstange (14) ausbildet, in die ein Kupplungsglied (82) des Lademechanismus eingreifen kann.

17. Gerät nach Anspruch 16, dadurch gekennzeichnet, daß die Mitnehmerstange (14k) zur Ausbildung der Mitnehmermulde (14m) eine Kupplungsnase (14n) aufweist, die sich in der Kuppelposition in einem Abstand von einer Endfläche (14o) der Steuerstange (14) befindet, wobei sich zwischen der Kupplungsnase (14n), der Endfläche (14o) und der Steuerstange (14) die Mulde (14m) ausbildet.

18. Gerät nach Anspruch 16, dadurch gekennzeichnet, daß die Mitnehmerstange (14k) über die Mitnehmermulde (14m) hinaus verlängert ist und die Verlängerung (14c) derart mit den am Laufwerk angeordneten Führungen (242, 242a) zusammenwirkt, daß diese Führungen (242, 242a) die Mitnehmerstange (14k) zum Einfangen in oder Freigeben aus der Mulde (14m) des Kupplunsgliedes (82) verschwenken.

19. Gerät nach Anspruch 2, dadurch gekennzeichnet, daß die Mitnehmerstange (14k) in Längsrichtung federnd nachgiebig ist.

## Claims

1. A magnetic tape cassette apparatus having a control device for controlling tape-deck functions including the drawing-in and ejection of a cassette (86) by means of a drive mechanism having a motor (40), which drive mechanism comprises a control rod (14) which is movable back and forth in a longitudinal direction by a servo motor (40), which control rod can be moved along its path of movement between end points and, in given operating positions, controls tape-deck functions in conjunction with switch actuators and a logic circuit, characterised in that
- a coupling rod (14a) is guided on the control rod (14) so as to be movable in the longitudinal direction thereof,
- the coupling rod (14a) can be lock to the control rod (14) along a part of the path of movement of the control rod,
- the coupling rod (14a) is mechanically coupled to the loading mechanism of the tape deck,
- by means of switch actuators provided on the coupling rod (14a) and the control rod (14) to produce switching signals said coupling rod and control rod act on a control switch (70) which applies the commands imparted by switch actuators (14g, 72) to the logic circuit, which derives therefrom switching commands for apparatus functions.

2. A magnetic tape cassette apparatus having a control device for controlling tape-deck functions including the drawing-in and ejection of a cassette (86) by means of a drive mechanism having a motor (40), which drive mechanism comprises a control rod (14) which is movable back and forth in a longitudinal direction by a servo motor (40), which control rod can be moved along its path of movement between end points and, in given operating positions, controls tape-deck functions in conjunction with switch actuators and a logic circuit, characterised in that
- a coupling rod (14k), which can be moved transversely of the longitudinal direction of movement of the control rod (14), is arranged on the control rod (14),
- the coupling rod (14k) can be coupled to the loading mechanism of the tape deck,
- the coupling rod (14k) can be coupled to or disengaged from the loading mechanism by transverse movements with the aid of stationary guides (242, 242a) on the tape deck,
- by means of at least one switch actuator (72) provided on the control rod (14) to produce switching signals at least said control rod acts on a control switch (70) which applies the commands imparted by switch actuator (72) to the logic circuit, which derives therefrom switching commands for apparatus functions.

3. An apparatus as claimed in Claim 1 or 2, characterised in that all the switch actuators (14a, 14g, 65, 72) of the control device act on a single control switch (70) which controls all the electrical control functions of the tape deck *via* the logic circuit.

4. An apparatus as claimed in Claim 1 or 2, characterised in that at least at the end points (C,D) of their path of movement the control rod (14) and the coupling rod (14a, 14k) are disengaged from one another so that their switch actuators (14g, 72) can act on the control switch (70) independently of the position of the respective other rod.

5. An apparatus as claimed in Claim 1, characterised in that a two-arm latching lever (53) is arranged on the control rod (14), whose first latching arm (53a) is spring-loaded to engage a recess (14c) in the coupling rod (14a) for the purpose of coupling the control rod (14) and the coupling rod (14a), and whose second latching arm (53b) cooperates with stationary guides (56, 57) which act to pivot the latching lever (53), opposed by spring force, in such a manner that the first latching arm (53a) cannot engage the recess (14c) and thus cannot couple.

6. An apparatus as claimed in Claim 1 or 2, characterised in that the control switch (70) has a switching nose (71) which, when not mechanically loaded, is in a neutral centre position and which, when released or actuated, in one or in the other direction of movement of the control rod, causes the switch actuators (14g, 14a, 65, 72) to supply switching pulses.

7. An apparatus as claimed in Claim 1 or 2, characterised in that the control rod (14) has rack teeth (14e) and a gear wheel (60) of the servo mechanism cooperates with said rack teeth (14e).

8. An apparatus as claimed in Claim 1 or 2, characterised in that during its longitudinal movement in the draw-in direction of a cassette (86) the control rod (14), after disengagement from the loading mechanism, up to an end point of its path of movement, can be moved independently of the loading mechanism, *i*.*e*. so far that it strikes against a limb (9) of the head plate (3) of the apparatus and thus pivots the head plate (3) into its play position, a switch actuator on the control rod (14) actuating the control switch (70) in order to cause a reversal of the direction of rotation of the servo motor.

9. An apparatus as claimed in Claim 1, characterised in that the coupling rod (14a) is provided with a switch actuator (14g) which, during the insertion of the cassette (86), causes the control switch (70) to supply a starting pulse and, during ejection, causes it to supply a stop pulse for the servo motor (40).

10. An apparatus as claimed in Claims 2 and 3, having a actuating lever (221) which is mounted for pivotal movement adjacent the loading mechanism and, extending over the loading mechanism, acts on a cassette driver (217) which can be moved between an eject and a draw-in position by the actuating lever (221), characterised in that the actuating lever (221) acts with a switching pin (237), serving as switch actuator, on the sole control switch (70) to supply start and stop pulses.

11. An apparatus as claimed in Claim 1 or 2, characterised in that there has been provided a switching member (59) for the servo mechanism, which switching member is pivotable about a pivot (62) and also has a switch actuator (65) for the one control switch (70) which after completion of the servo movements of the servo mechanism by actuation of the control switch (70) gives the logic circuit (46) the signal that servo operations, such as drawing-in of the cassette or the movement of the head plate into the play position, have been completed.

12. An apparatus as claimed in Claim 11, characterised in that the pivotable switching member (59) can be held in the servo driving position by the control rod (14) itself by means of a servo gear wheel (60) carried by said switching member and capable of establishing the connection between the servo motor (40) and the teeth (14e) of the control rod (14), and, for the purpose of switching over from the servo mode to the play mode, can be released from this connection by the control rod (14) to pivot and effect the switching over with simultaneous actuation of the control switch (70).

13. An apparatus as claimed in Claim 11, characterized in that the switching member (59) has a stop pin (67) which, in conjunction with the limb (9) of the head plate (3), holds the servo mechanism in the position of engagement with the control rod (14) or releases it for switching over.

14. An apparatus as claimed in Claim 12, characterized in that the switching member (59), as it pivots, releases a coupling pin (99) of a reversing mechanism (100) from a fork-shaped member (78) to allow the reversing mechanism (100) to bring a transmission gear wheel (52) in mesh with the one or the other reel disc (42, 43) for the purpose of coupling the central gear wheel (50) to one of the reel discs (42, 43).

15. An apparatus as claimed in Claim 13, characterised in that the switching member (59) has a guide pin (66) which, during movement of the control rod (14), engages behind a guide edge (66a) of the control rod (14) and thereby holds the switching member (59) in a pivoted position in which the servo mechanism (50a) drives the control rod (14) and the reversing mechanism (52) is disengaged from the reel discs (42, 43).

16. An apparatus as claimed in Claim 2, characterised in that the coupling rod (14k) is pivotably mounted on the control rod (14) and adjacent one end face (140) of the control rod (14) forms a coupling recess (14m) in which a coupling member (82) of the loading mechanism is engageable.

17. An apparatus according to Claim 16, characterised in that for the formation of the coupling recess (14m) the coupling rod (14k) has a coupling projection (14n) which, in the coupling position, is spaced from a end face (140) of the control rod (14), the recess (14m) being formed between the coupling projection (14n), the end face (140) and the control rod (14).

18. An apparatus as claimed in Claim 15, characterised in that the coupling rod (14k) is extended beyond the catch pocket (14m) and the extension (14c) cooperates with the guides (242, 242a) provided on the drive mechanism in such a way that said guides (242, 242a) pivot the coupling rod (14k) so as to catch the coupling member (82) in or disengage it from the recess (14m).

19. An apparatus as claimed in Claim 2, characterised in that the coupling rod (14k) is capable of resilient deflection in the longitudinal direction.

## Revendications

1. Magnétocassette avec un dispositif de commande pour la commande de fonctions du mécanisme d'entraînement, y compris l'introduction et l'éjection d'une cassette (86) au moyen d'un entraînement équipé d'un moteur (40), qui comprend une tige de commande (14) déplaçable longitudinalement en va-et-vient par un servomoteur (40), cette tige pouvant parcourir sa course de déplacement entre ses positions de fin de course et commandant dans certaines positions fonctionnelles des fonctions du mécanisme d'entraînement en association avec des organes de contact et un circuit logique, caractérisé en ce que :
- une tige d'entraînement (14a) est guidée de manière mobile sur la tige de commande (14), dans sa direction longitudinale;
- la tige d'entraînement (14a) peut être verrouillée avec la tige de commande (14) sur une partie de la course de déplacement de la tige de commande;
- la tige d'entraînement (14a) est couplée mécaniquement au mécanisme de chargement du mécanisme d'entraînement, et
- la tige d'entraînement (14a) et la tige de commande (14) agissent, par des organes de contact qui leur sont propres, en vue de déclencher des signaux de commutation, sur un commutateur de commande (70) qui amène les ordres communiqués par les organes de contact (14g, 72) au circuit logique qui élabore les instructions de commutation pour les fonctions de l'appareil à partir de ceux-ci.

2. Magnétocassette avec un dispositif de commande pour la commande de fonctions du mécanisme d'entraînement, y compris l'introduction et l'éjection d'une cassette (86) au moyen d'un entraînement équipé d'un moteur (40), qui comprend une tige de commande (14) déplaçable longitudinalement en va-et-vient par un servomoteur (40), cette tige pouvant parcourir sa course de déplacement entre ses positions de fin de course et commandant dans certaines positions fonctionnelles des fonctions du mécanisme d'entraînement en association avec des organes de contact et un circuit logique, caractérisé en ce que :
- une tige d'entraînement (14k) est montée sur la tige de commande (14) et est mobile transversalement par rapport à la direction longitudinale de la tige de commande (14);
- la tige d'entraînement (14k) peut être accouplée au mécanisme de chargement du mécanisme d'entraînement;
- la tige d'entraînement (14k) peut être accouplée au mécanisme de chargement ou désaccouplée de celui-ci par des mouvements transversaux à l'aide de guides (242, 242a) montés fixes sur le mécanisme d'entraînement, et
- la tige d'entraînement (14) au moins agit sur un commutateur de commande par au moins un organe de contact (72) qui lui est propre pour déclencher des signaux de commutation, ledit commutateur amenant les ordres communiqués par l'organe de contact (72) au circuit logique qui élabore les instructions de commutation pour les fonctions de l'appareil à partir de ceux-ci.

3. Appareil selon la revendication 1 ou 2, caractérisé en ce que tous les organes de contact (14a, 14g, 65, 72) du dispositif de commande agissent sur un seul commutateur de commande (70) qui commande toutes les fonctions électriques de commande du mécanisme d'entraînement par l'intermédiaire du circuit logique.

4. Appareil selon la revendication 1 ou 2, caractérisé en ce que la tige de commande (14) et la tige d'entraînement (14a, 14k) sont désaccouplées, du moins dans leurs positions de fin de course (C, D) de leur course de déplacement afin que leurs organes de contact (14g, 72) puissent agir sur le commutateur de commande (70), indépendamment de la position de l'autre tige respective.

5. Appareil selon la revendication 1, caractérisé en ce qu'une bascule à cliquet à deux bras (53) est montée sur la tige de commande (14), le premier bras de cliquet (53a), sollicité par ressort, tendant, en vue de l'accouplement de la tige de commande (14) et de la tige d'entraînement (14a), à s'engager dans un évidement (14c) de la tige d'entraînement (14a) et le deuxième bras de cliquet (53b) coopérant avec des guides fixes (56, 57) dont l'intervention fait pivoter la bascule à cliquet (53) contre la force du ressort, de sorte que le premier bras de cliquet (53a) ne puisse pas s'engager dans l'évidement (14c) et ne puisse par conséquent pas s'accoupler de cette manière.

6. Appareil selon la revendication 1 ou 2, caractérisé en ce que le commutateur de commande (70) présente un doigt de commutation (71) qui, sans sollicitation mécanique se trouve dans une position médiane neutre et qui, par l'intermédiaire des organes de contact (14g, 14a, 65, 72), lors de la libération ou de l'attaque de ceux-ci, délivre des impulsions de commutation dans l'une ou l'autre direction de déplacement de la tige de commande.

7. Appareil selon la revendication 1 ou 2, caractérisé en ce que la tige de commande (14) présente une denture de crémaillère (14e) et une roue dentée (60) de la servotransmission coopère avec cette denture de la crémaillère (14e).

8. Appareil selon l'une des revendications 1 ou 2, caractérisé en ce que la tige de commande (14) est déplaçable dans son mouvement longitudinal dans la direction d'introduction d'une cassette (86), après un désaccouplement du mécanisme de chargement, jusqu'à une position de fin de course de sa course de déplacement, indépendamment du mécanisme de chargement, et ce, jusqu'à ce qu'elle heurte une branche (9) de la plaque porte-tête (3) de l'appareil et fasse ainsi pivoter la plaque porte-tête (3) dans sa position de lecture, un organe de contact sur la tige de commande (14) heurtant le commutateur de commande (70) pour provoquer une inversion du sens de rotation du servomoteur.

9. Appareil selon la revendication 1, caractérisé en ce que la tige d'entraînement (14a) est pourvue d'un organe de contact (14g) qui amène le commutateur de commande (70), lors de l'introduction de la cassette (86), à délivrer une impulsion de démarrage et, lors de son extraction, à délivrer une impulsion d'arrêt pour le servomoteur (40).

10. Appareil selon les revendications 2 et 3, avec un levier d'actionnement (221) qui est monté à pivotement latéralement par rapport au mécanisme de chargement et opère par l'intermédiaire du mécanisme de chargement agissant sur un taquet d'entraînement de cassette (217) qui est déplaçable par le levier d'actionnement (221) entre une position d'éjection et une position d'introduction, caractérisé en ce que le levier d'actionnement (221) agit par un ergot de commutation (237) faisant office d'organe de contact sur le seul commutateur de commande (70) en vue de délivrer des impulsions de démarrage et d'arrêt.

11. Appareil selon la revendication 1 ou 2, caractérisé en ce qu'il est prévu un élément de commutation (59) de la servotransmission pouvant pivoter autour d'un axe (62), qui comporte également un organe de contact (65) pour le commutateur de commande (70) qui transmet, à la fin des mouvements servocommandés du servomécanisme, au circuit logique (46), par attaque du commutateur de commande (70), le signal indiquant que les procédures servocommandées telles que l'introduction de la cassette ou l'amenée de la plaque porte-tête en position de lecture, sont terminées.

12. Appareil selon la revendication 11, caractérisé en ce que l'élément de commutation pouvant pivoter (59) avec une roue dentée asservie (60) portée par lui qui peut assurer la liaison entre le servomoteur (40) et la denture (14e) de la tige de commande (14), peut être maintenu par la tige de commande (14) elle-même en position d'entraînement asservi et peut, en vue de la commutation du mode asservi au mode de lecture, être dégagé de cette liaison par la tige de commande (14) en vue du pivotement et de l'accomplissement de la commutation lors d'un actionnement simultané du commutateur de commande (70).

13. Appareil selon la revendication 11, caractérisé en ce que l'élément de commutation (59) présente un ergot de butée (67) qui, en association avec la branche (9) de la plaque porte-tête (3), maintient le servomécanisme en position engagée avec la tige de commande (14) ou le libère en vue de la commutation.

14. Appareil selon la revendication 12, caractérisé en ce que, lors du pivotement, l'élément de commutation (59) libère d'une fixation à fourche (78) un ergot d'entraînement (99) d'une commande d'inversion (100) afin que la commande d'inversion (100) puisse appliquer une roue dentée de transmission (52) contre l'un ou l'autre des plateaux de bobinage (42, 43) en vue d'accoupler la roue centrale (50) avec l'un des plateaux de bobinage (42, 43).

15. Appareil selon la revendication 13, caractérisé en ce que l'élément de commutation (59) est pourvu d'un ergot de guidage (66) qui, lors du déplacement de la tige de commande (14), s'engage derrière un bord de guidage (66a) de la tige de commande (14) et maintient ainsi l'élément de commutation (59) dans une position de pivotement dans laquelle la servotransmission (50a) entraîne la tige de commande (14) et la commande d'inversion (52) n'est pas en prise avec les plateaux de bobinage (42, 43).

16. Appareil selon la revendication 2, caractérisé en ce que la tige d'entraînement (14k) est montée à pivotement sur la tige de commande (14) et forme une cavité d'entraînement (14m) latéralement par rapport à une face d'extrémité (14o) de la tige de commande (14) dans laquelle peut s'engager un élément d'accouplement (82) du mécanisme de chargement.

17. Appareil selon la revendication 16, caractérisé en ce que la tige d'entraînement (14k) présente, pour la formation de la cavité d'entraînement (14m), un taquet d'accouplement (14n) qui, dans la position d'accouplement, est espacé d'une face d'extrémité (14o) de la tige de commande (14), la cavité (14m) étant formée entre le taquet d'accouplement (14n), la face d'extrémité (14o) et la tige de commande (14).

18. Appareil selon la revendication 16, caractérisé en ce que la tige d'entraînement (14k) est prolongée au-delà de la cavité d'entraînement (14m) et le prolongement (14c) coopère avec les guides (242, 242a) disposés sur le mécanisme d'entraînement, de telle sorte que ces guides (242, 242a) fassent pivoter la tige d'entraînement (14k) en vue d'insérer l'élément d'accouplement (82) dans la cavité (14m) ou de l'en dégager.

19. Appareil selon la revendication 2, caractérisé en ce que la tige d'entraînement (14k) est élastiquement souple en direction longitudinale.
